# EUROPEAN PATENT APPLICATION

(11) **EP 4 294 087 A1**
(43) Date of publication of application: **20.12.2023**
(21) Application number: 22778499.8
(22) Date of filing: 09.03.2022
(51) Int. Cl.: H04W 48/18

(54) **ACCESS CONTROL METHOD AND APPARATUS FOR NETWORK SLICE**

(30) Priority: 29.03.2021 CN 202110336606
(71) Applicant: Huawei Technologies Co., Ltd., Shenzhen, Guangdong 518129 (CN)
(72) Inventor: ZHU, Fangyuan, Shenzhen, Guangdong 518129 (CN); LI, Yan, Shenzhen, Guangdong 518129 (CN)
(74) Representative: Körber, Martin Hans
(86) International application number: PCT/CN2022/079817
(87) International publication number: WO 2022/206315

(57) **Abstract**

This application discloses a network slice admission control method and an apparatus. The method includes: A UE sends a registration request message to an AMF, and the AMF receives the registration request message, where the registration request message carries identification information of a network slice that the UE requests to access. When a quantity of UEs that access a network slice subject to admission control in the network slice that the UE requests to access is greater than or equal to a first threshold, the AMF sends, to the UE, a registration accept message that carries identification information of a first network slice, where the first network slice is a network slice that the UE is allowed to access. The UE receives the registration accept message. According to the method provided in this application, when the quantity of UEs that access the network slice subject to admission control in the network slice that the UE requests to access is greater than or equal to the first threshold, it can still be ensured that the UE can successfully register with and access the network slice.

## Description

This application claims priority to Chinese Patent Application No. 202110336606.2, filed with the China National Intellectual Property Administration on March 29, 2021 and entitled "NETWORK SLICE ADMISSION CONTROL METHOD AND APPARATUS", which is incorporated herein by reference in its entirety.

### TECHNICAL FIELD

This application relates to the field of communication technologies, and in particular, to a network slice admission control method and an apparatus.

### BACKGROUND

In a 5th generation (5th-generation, 5G) communication system, hundreds of billions of internet of things devices access a network. Different types of application scenarios have different network requirements, and some of the different network requirements even conflict with each other. If a single network is used to provide services for different types of application scenarios, a network architecture is extremely complex, and network management efficiency and resource utilization are low.

Therefore, a network slicing technology is used to provide network environments isolated from each other for different application scenarios by virtualizing independent logical networks on a same network infrastructure, allowing to customize network functions and features for different application scenarios as required, so as to effectively ensure quality of service (quality of service, QoS) requirements of different services. An objective of 5G network slicing is to organically combine terminal devices, access network resources, core network resources, network operation and maintenance and management systems, and the like, to provide networks that are independently maintained and isolated from each other for different application scenarios or service types.

In an actual deployment scenario of slicing, due to a network resource limitation and the like, a quantity of users registered with a network slice is limited. Therefore, when the quantity of users that access the network slice reaches a maximum value, how to ensure that a terminal device accesses the network slice needs to be urgently resolved.

### SUMMARY

This application provides a network slice admission control method and an apparatus, to ensure that a terminal device can still access a network slice when a quantity of terminal devices that access the network slice that the terminal device requests to access reaches a specific quantity (for example, a maximum access quantity).

According to a first aspect, an embodiment of this application provides a network slice admission control method. The method includes:
An access and mobility management network element receives a registration request message from a terminal device. The registration request message carries identification information of a network slice that the terminal device requests to access. When a quantity of terminal devices that access a network slice subject to admission control in the network slice that the terminal device requests to access is greater than or equal to a first threshold, the access and mobility management network element sends, to the terminal device, a registration accept message that carries identification information of a first network slice. The first network slice is a network slice that the terminal device is allowed to access.

In this embodiment of this application, the access and mobility management network element may also be referred to as a network element, a device, or the like that has an access and mobility management function. For example, the access and mobility management network element may be an access and mobility management function (access and mobility management function, AMF) network element in a 5G network architecture.

The terminal device may request to access one network slice, or at least two network slices, for example, two or three network slices. It may be understood that, in this embodiment of this application, although the first threshold is used for measuring whether the terminal device is further allowed to access the network slice subject to admission control in the network slice that the terminal device requests to access, when there are two or more network slices subject to admission control in the network slice that the terminal device requests to access, whether first thresholds corresponding to the two or more network slices are the same is not limited in this embodiment of this application. In other words, if network slices subject to admission control in the network slice that the terminal device requests to access are a network slice 1 and a network slice 2, a first threshold used for measuring the network slice 1 may be different from a first threshold used for measuring the network slice 2.

For example, the network slice subject to admission control in the network slice that the terminal device requests to access includes a second network slice. That a quantity of terminal devices that access the second network slice is greater than or equal to the first threshold may also be understood as follows: A quantity of terminal devices that have currently accessed the second network slice is greater than or equal to the first threshold, a quantity of terminal devices that have accessed the second network slice exceeds a quota a new terminal device cannot be allowed to access the second network slice, or a quantity of terminal devices that have accessed the second network slice reaches a maximum quantity (the first threshold) of terminal devices that are allowed to access the second network slice. Because the quantity of terminal devices that access the second network slice is greater than or equal to the first threshold, the terminal device cannot access the second network slice.

It may be understood that the first network slice described in this embodiment of this application may be a network slice that is not in the network slice that the terminal device requests, where the network slice that the terminal device requests is carried in the registration request message.

Generally, if a quantity of terminal devices that have accessed the network slice subject to admission control in the network slice that the terminal device requests to access exceeds a quota, the terminal device cannot access the network slice. Consequently, registration of the terminal device is unsuccessful. However, in this embodiment of this application, even if the quantity of terminal devices that access the network slice subject to admission control in the network slice that the terminal device requests exceeds the quota, there is still a network slice, for example, the first network slice, that the terminal device is allowed to access. Therefore, the registration of the terminal device is successful, and it can be ensured that the terminal device can perform service communication and the like in time via the first network slice.

In a possible implementation, the first network slice is a default subscribed network slice of the terminal device.

Generally, subscription information (which may also be referred to as subscription data) of the terminal device includes the default subscribed network slice. When the quantity of terminal devices that access the network slice subject to admission control in the network slice that the terminal device requests to access is greater than or equal to the first threshold, a quantity of terminal devices that access the default subscribed network slice of the terminal device may not reach a specific quantity, or the default subscribed network slice is not subject to admission control. In this case, the terminal device accesses the default subscribed network slice. This avoids a case in which the registration of the terminal device is unsuccessful, and the terminal device can access the network slice in time, ensuring quality of service of the terminal device.

In a possible implementation, the method further includes: The access and mobility management network element determines to allow the terminal device to access the default subscribed network slice.

In this embodiment of this application, if the default subscribed network slice is not subject to admission control, the access and mobility management network element may determine, from one or more default subscribed network slices, at least one first network slice as a network slice that the terminal device is allowed to access. If the first network slice is subject to admission control, the access and mobility management network element may determine, after determining that the quantity of terminal devices that access the default subscribed network slice is less than a second threshold and from one or more default subscribed network slices whose quantities of accessing terminal devices are less than the second threshold, the at least one first network slice as the network slice that the terminal device is allowed to access.

In a possible implementation, that the access and mobility management network element determines to allow the terminal device to access the default subscribed network slice includes:
The access and mobility management network element configures first information. The first information indicates to allow the terminal device to access the default subscribed network slice when the quantity of terminal devices that access the network slice subject to admission control in the network slice that the terminal device requests to access is greater than or equal to the first threshold. The access and mobility management network element determines, based on the first information, to allow the terminal device to access the default subscribed network slice.

In a possible implementation, that the access and mobility management network element determines to allow the terminal device to access the default subscribed network slice includes:
The access and mobility management network element sends a first request message to a unified data management network element. The access and mobility management network element receives a first response message from the unified data management network element. The first response message carries the identification information of the default subscribed network slice and first indication information. The first indication information indicates to allow the terminal device to access the default subscribed network slice when the quantity of terminal devices that access the network slice subject to admission control in the network slice that the terminal device requests to access is greater than or equal to the first threshold. The access and mobility management network element determines, based on the first indication information, to allow the terminal device to access the default subscribed network slice.

In a possible implementation, that the access and mobility management network element determines to allow the terminal device to access the default subscribed network slice includes:

The access and mobility management network element determines, based on subscription information of the terminal device, to allow the terminal device to access the default subscribed network slice. The subscription information of the terminal device includes first indication information. The first indication information indicates to allow the terminal device to access the default subscribed network slice when the quantity of terminal devices that access the network slice subject to admission control in the network slice that the terminal device requests to access is greater than or equal to the first threshold.

In a possible implementation, a quantity of terminal devices that access the first network slice is less than a second threshold.

In a possible implementation, the method further includes:
The access and mobility management network element sends a second request message to a first network element. The second request message carries identification information of the network slice subject to admission control in the network slice that the terminal device requests to access and identification information of the default subscribed network slice. The access and mobility management network element receives a second response message from the first network element. The second response message carries second indication information and third indication information. The second indication information indicates that the quantity of terminal devices that access the network slice subject to admission control in the network slice that the terminal device requests to access is greater than or equal to the first threshold, and the third indication information indicates that a quantity of terminal devices that access the default subscribed network slice is less than the second threshold.

In this embodiment of this application, the access and mobility management network element may obtain, via the second request message, both the quantity of terminal devices that access the first network slice and the quantity of terminal devices that access the network slice subject to admission control in the network slice that the terminal device requests to access. In this way, when the quantity of terminal devices that access the network slice subject to admission control in the network slice that the terminal device requests to access is greater than or equal to the first threshold, the access and mobility management network element may determine, based on the quantity of terminal devices that access the default subscribed network slice, that the first network slice is the network slice that the terminal device is allowed to access. In this way, it can be ensured that the terminal device can access the first network slice, to avoid the case in which the registration of the terminal device is unsuccessful. In addition, because the access and mobility management network element may determine the first network slice by interacting with the first network element once (via the second request message and the second response message), signaling interaction efficiency is improved.

In a possible implementation, the second request message further includes fourth indication information. The fourth indication information indicates to trigger (or may be understood as activating) admission control on the default subscribed network slice when the quantity of terminal devices that access the network slice subject to admission control in the network slice that the terminal requests to access is greater than or equal to the first threshold.

In a possible implementation, the second request message further includes fifth indication information. The fifth indication information indicates the first network element to determine the first network slice from a plurality of default subscribed network slices, or the fifth indication information indicates the first network element to perform terminal device counting on only the first network slice in the plurality of default subscribed network slices.

In a possible implementation, the first network slice is a network slice in the plurality of default subscribed network slices that is accessed by a smallest quantity of terminal devices.

In a possible implementation, the method further includes:
The access and mobility management network element sends a third request message to a first network element when the quantity of terminal devices that access the network slice subject to admission control in the network slice that the terminal device requests to access is greater than or equal to the first threshold. The third request message carries identification information of the default subscribed network slice. The access and mobility management network element receives a third response message from the first network element. The third response message carries third indication information, and the third indication information indicates that a quantity of terminal devices that access the default subscribed network slice is less than the second threshold.

In a possible implementation, the third request message further includes sixth indication information. The sixth indication information indicates the first network element to determine the first network slice from a plurality of default subscribed network slices, or the sixth indication information indicates the first network element to perform terminal device counting on only the first network slice in the plurality of default subscribed network slices.

In a possible implementation, the first network slice is a network slice in the plurality of default subscribed network slices that is accessed by a smallest quantity of terminal devices.

In a possible implementation, the first network slice is a network slice not subject to admission control.

In a possible implementation, the method further includes:
The access and mobility management network element sends a subscription request message to the first network element. The subscription request message carries the identification information of the network slice subject to admission control in the network slice that the terminal device requests to access and identification information of the terminal device. The access and mobility management network element receives a first notification message from the first network element. The first notification message carries seventh indication information, and the seventh indication information indicates that a quantity of terminal devices that access a second network slice in the network slice subject to admission control in the network slice that the terminal device requests to access is less than the first threshold. The access and mobility management network element sends a second notification message to the terminal device. The second notification message carries identification information of the second network slice.

In this embodiment of this application, when a quantity of UEs that access the second network slice is less than the first threshold, it is ensured that a UE can effectively access the second network slice in time. In this way, fairness of accessing a network slice by the UE is further effectively ensured, so that the UE can access a network slice that the UE requests to access.

According to a second aspect, an embodiment of this application provides a network slice admission control method. The method includes:
A terminal device sends a registration request message to an access and mobility management network element. The registration request message carries identification information of a network slice that the terminal device requests to access.

The terminal device receives a registration accept message from the access and mobility management network element. The registration accept message carries identification information of a first network slice. The first network slice is a network slice that the terminal device is allowed to access.

In a possible implementation, the first network slice is a default subscribed network slice of the terminal device.

In a possible implementation, a quantity of terminal devices that access the first network slice is less than a second threshold.

In a possible implementation, the first network slice is a network slice in a plurality of default subscribed network slices that is accessed by a smallest quantity of terminal devices.

In a possible implementation, the first network slice is a network slice not subject to admission control.

According to a third aspect, an embodiment of this application provides a communication apparatus, configured to perform the method in any one of the first aspect or the possible implementations of the first aspect. The communication apparatus includes corresponding units configured to perform the method in any one of the first aspect or the possible implementations of the first aspect.

For example, the communication apparatus may be an access and mobility management network element, a chip in the access and mobility management network element, or the like.

According to a fourth aspect, an embodiment of this application provides a communication apparatus, configured to perform the method in any one of the second aspect or the possible implementations of the second aspect. The communication apparatus includes corresponding methods configured to perform the method in any one of the second aspect or the possible implementations of the second aspect.

For example, the communication apparatus may be a terminal device, a chip in the terminal device, or the like.

In the third aspect or the fourth aspect, the communication apparatus may include a transceiver unit and a processing unit. For specific descriptions of the transceiver unit and the processing unit, refer to apparatus embodiments shown below.

According to a fifth aspect, an embodiment of this application provides a communication apparatus. The communication apparatus includes a processor, configured to perform the method shown in any one of the first aspect or the possible implementations of the first aspect. Alternatively, the processor is configured to execute a program stored in a memory. When the program is executed, the method shown in any one of the first aspect or the possible implementations of the first aspect is performed.

In a process of performing the foregoing method, a process related to sending a message (for example, sending a registration accept message or a first request message) in the foregoing method may be understood as a process in which the processor outputs the message. When the processor outputs the message, the processor outputs the message to a transceiver, so that the transceiver transmits the message. After the message is output by the processor, other processing may further need to be performed on the message before the message arrives at the transceiver. Similarly, when the processor receives an input message (for example, receives a registration request message or a first response message), the transceiver receives the message, and inputs the message into the processor. Still further, after the transceiver receives the message, other processing may need to be performed on the message before the message is input into the processor.

It may be understood that, unless otherwise specified, or if operations such as transmitting, sending, and receiving related to the processor do not contradict an actual function or internal logic of the operations in related descriptions, all the operations may be more generally understood as operations such as outputting, receiving, and inputting of the processor, instead of operations such as transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in this embodiment of this application. It may be understood that descriptions of the processor and the memory are also applicable to a sixth aspect shown below. For ease of description, details are not described again in the sixth aspect.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive or send a signal.

For example, the transceiver may be configured to receive a registration request message, and send a registration accept message. For another example, the transceiver may be configured to send a first request message, and receive a first response message. For another example, the transceiver may be configured to send a second request message, receive a second response message, and the like. Details are not described herein.

In this embodiment of this application, the communication apparatus may be an access and mobility management network element, a chip in the access and mobility management network element, or the like.

According to a sixth aspect, an embodiment of this application provides a communication apparatus. The communication apparatus includes a processor, configured to perform the method shown in any one of the second aspect or the possible implementations of the second aspect. Alternatively, the processor is configured to execute a program stored in a memory. When the program is executed, the method shown in any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive or send a signal.

In this embodiment of this application, the communication apparatus may be a terminal device, a chip in the terminal device, or the like.

According to a seventh aspect, an embodiment of this application provides a communication apparatus. The communication apparatus includes a logic circuit and an interface. The logic circuit is coupled to the interface. The interface is configured to input a registration request message and output a registration accept message. It may be understood that the logic circuit may be configured to process the input registration request message and the like. A specific implementation of the logic circuit is not limited in this embodiment of this application.

For example, the logic circuit is configured to determine that a first network slice is a candidate network slice of a network slice that a terminal device is allowed to access.

For another example, the interface is further configured to output a second request message, and input a second response message.

For another example, the interface is further configured to output a third request message, and input a third response message.

For another example, the interface is further configured to output a subscription request message, input a first notification message, output a second notification message, and the like.

It may be understood that, for specific descriptions of the logic circuit and the interface, refer to apparatus embodiments shown below. Details are not described herein.

According to an eighth aspect, an embodiment of this application provides a communication apparatus. The communication apparatus includes a logic circuit and an interface. The logic circuit is coupled to the interface. The interface is configured to output a registration request message and input a registration accept message.

The logic circuit is configured to process the input registration accept message and the like. A specific implementation of the logic circuit is not limited in this embodiment of this application.

In the seventh aspect and the eighth aspect, for descriptions of the first network slice, the registration request message, the registration accept message, the first request message, the first response message, the second request message, the second response message, the third request message, the third response message, the subscription request message, the first notification message, the second notification message, and the like, refer to the descriptions of the first aspect or the second aspect; or refer to various embodiments shown below. Details are not described herein.

According to a ninth aspect, an embodiment of this application provides a computer-readable storage medium. The computer-readable storage medium is configured to store a computer program. When the computer program is run on a computer, the method shown in any one of the first aspect or the possible implementations of the first aspect is performed.

According to a tenth aspect, an embodiment of this application provides a computer-readable storage medium. The computer-readable storage medium is configured to store a computer program. When the computer program is run on a computer, the method shown in any one of the second aspect or the possible implementations of the second aspect is performed.

According to an eleventh aspect, an embodiment of this application provides a computer program product. The computer program product includes a computer program or computer code. When the computer program product runs on a computer, the method shown in any one of the first aspect or the possible implementations of the first aspect is performed.

According to a twelfth aspect, an embodiment of this application provides a computer program product. The computer program product includes a computer program or computer code. When the computer program product runs on a computer, the method shown in any one of the second aspect or the possible implementations of the second aspect is performed.

According to a thirteenth aspect, an embodiment of this application provides a computer program. When the computer program is run on a computer, the method shown in any one of the first aspect or the possible implementations of the first aspect is performed.

According to a fourteenth aspect, an embodiment of this application provides a computer program. When the computer program is run on a computer, the method shown in any one of the second aspect or the possible implementations of the second aspect is performed.

According to a fifteenth aspect, an embodiment of this application provides a wireless communication system. The wireless communication system includes an access and mobility management network element and a terminal device. The access and mobility management network element is configured to perform the method shown in any one of the first aspect or the possible implementations of the first aspect. The terminal device is configured to perform the method shown in any one of the second aspect or the possible implementations of the second aspect.

According to a sixteenth aspect, an embodiment of this application provides a wireless communication system. The wireless communication system includes an access and mobility management network element and a first network element. The access and mobility management network element is configured to perform the method shown in any one of the first aspect or the possible implementations of the first aspect. The first network element is configured to perform admission control on a network slice, and the like. For a specific implementation of the first network element, refer to the first aspect, or refer to method embodiments and the like shown below.

According to a seventeenth aspect, an embodiment of this application provides a wireless communication system. The wireless communication system includes an access and mobility management network element, a first network element, and a terminal device. For specific implementations of the access and mobility management network element, the first network, and the terminal device, refer to the first aspect and the second aspect, or refer to method embodiments shown below.

### BRIEF DESCRIPTION OF DRAWINGS

FIG. 1 is a schematic diagram of a communication system according to an embodiment of this application;
FIG. 2 is a schematic diagram of another communication system according to an embodiment of this application;
FIG. 3 is a schematic flowchart of a registration method according to an embodiment of this application;
FIG. 4 is a schematic flowchart of a network slice admission control method according to an embodiment of this application;
FIG. 5a to FIG. 5c are each a schematic flowchart of a method for determining to allow a LTE to access a default subscribed network slice according to an embodiment of this application;
FIG. 6A and FIG. 6B to FIG. 8A and FIG. 8B are each a schematic flowchart of a network slice admission control method according to an embodiment of this application; and
FIG. 9 to FIG. 11 are each a schematic diagram of a structure of a communication apparatus according to an embodiment of this application.

### DESCRIPTION OF EMBODIMENTS

To make objectives, technical solutions, and advantages of this application clearer, the following further describes this application with reference to the accompanying drawings.

In the specification, claims, and the accompanying drawings of this application, terms such as "first" and "second" are only intended to distinguish between different objects but do not describe a particular order. In addition, terms "include", "have", or any other variant thereof are intended to cover a non-exclusive inclusion. For example, a process, a method, a system, a product, a device, or the like that includes a series of steps or units is not limited to the listed steps or units, but optionally further includes an unlisted step or unit, or optionally further includes another step or unit inherent to the process, the method, the product, the device, or the like.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" refers to one or more, "a plurality of" refers to two or more, "at least two (items)" refers to two or more, and "and/or" is used for describing an association relationship between associated objects, and indicates that three relationships may exist. For example, "A and/or B" may represent the following three cases: Only A exists, only B exists, and both A and B exist. A and B may be singular or plural. The character "/" generally indicates an "or" relationship between the associated objects. "At least one of the following items (pieces)" or a similar expression thereof means any combination of these items. For example, at least one of a, b, or c may represent: "a", "b", "c", "a and b", "a and c", "b and c", or "a and b and c".

The technical solutions provided in this application are applicable to various communication systems, for example, a long term evolution (long term evolution, LTE) system, an LTE frequency division duplex (frequency division duplex, FDD) system, an LTE time division duplex (time division duplex, TDD) system, an internet of things (internet of things, IoT) system, a narrowband internet of things (narrow band-internet of things, NB-IoT) system, wireless fidelity (wireless fidelity, Wi-Fi), a 5th generation (5th generation, 5G) communication system or a new radio (new radio, NR) system, and another future communication system, such as a 6th generation mobile communication system.

The following describes terms in this application in detail.

### 1. Terminal device

The terminal device in this application is an apparatus with a wireless transceiver function. The terminal device may communicate with one or more core network (core network, CN) devices (or may be referred to as core devices) via an access network device (or may be referred to as an access device) in a radio access network (radio access network, RAN). The terminal device may also be referred to as a user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor or outdoor device, a handheld device, or a vehicle-mounted device, may be deployed on water (for example, on a ship), or may be deployed in air (for example, on an airplane, a balloon, or a satellite). In a possible implementation, the terminal device may be a handheld device, a vehicle-mounted device, a wearable device, a terminal in the internet of things or the internet of vehicles, a terminal device in any form in a 5th generation (5th generation, 5G) network or a future network, or the like that has a wireless communication function. This is not limited in this application.

The terminal device described in this application may not only include a vehicle (for example, an entire vehicle) in the internet of vehicles, but also may include a vehicle-mounted device, a vehicle terminal, or the like in the internet of vehicles. A specific form of the terminal device applied to the internet of vehicles is not limited in this application.

For ease of description, a terminal device shown below uses LTE as an example to describe the method provided in this application.

### 2. AMF

With expansion of a mobile bandwidth access service, mobile networks develops accordingly to better support diversified business models and meet requirements of more diversified application services and industries. For example, to provide better and more comprehensive services for more industries, some adjustment is made on a network architecture of a 5G network compared with a 4G network. For example, in the 5G network, a mobility management entity (mobility management entity, MME) in the 4G network is split into a plurality of network elements (or may be referred to as network functions) including an access and mobility management function (access and mobility management function, AMF), a session management function (session management function, SMF), and the like.

The AMF described in this application is a control plane network function in a PLMN, and is responsible for access control and mobility management, for example, including mobility status management, temporary user identity assignment, user authentication and authorization, and other functions, for a LTE to access the PLMN. Therefore, with development of a mobile network, even if the AMF may evolve into another form, another name, or the like, the AMF falls within the protection scope of this application provided that the AMF can implement the method described in this application.

For ease of description, the following describes the method provided in this application by using an example in which an access and mobility management network element described below is an AMF.

### 3. First network element

The first network element described in this application may be configured to perform admission control (admission control) on a network slice. For example, the first network element may control and/or monitor (monitoring) a quantity of terminal devices that access a network slice subject to admission control, to ensure that a total quantity of terminal devices that have currently accessed the network slice does not exceed a maximum quantity/number of terminal devices that are allowed to access the network slice (maximum number of UEs per network slice). For example, the first network element may further store the quantity of terminal devices that have currently accessed the network slice, or store an identifier list (which may also be referred to as a first identifier list) of the terminal devices that have currently accessed the network slice, or the like. An identifier in the first identifier list identifies the terminal device that has currently accessed the network slice. For another example, the first network element may further configure a maximum quantity of terminal devices that are allowed to access the network slice. In other words, the first network element may configure a maximum quantity of users that are allowed to access the network slice (maximum number of UEs per network slice).

For example, a method in which the first network element performs admission control on the network slice may be as follows. For example, if a terminal device (for example, a terminal device 1) requests to access a network slice subject to admission control, the first network element checks whether a first identifier list (to be specific, an identifier list of terminal devices that have accessed a network slice subject to admission control, where the network slice subject to admission control is a network slice that the terminal device 1 requests to access) has included an identifier of the terminal device 1. If the first identifier list does not include the identifier of the terminal device 1, whether a quantity of terminal devices identified in the first identifier list has reached a maximum quantity of terminal devices that are allowed to access the network slice is further checked. If the maximum quantity (which may also be referred to as the maximum quantity of users) is not reached, the first network element increases a quantity of terminal devices that have currently accessed the network slice by 1, and adds the identifier of the terminal device 1 to the first identifier list. If the maximum quantity is reached, the terminal device is not allowed to access the network slice.

For example, the method in which the first network element performs admission control on the network slice may be as follows. For example, if a terminal device (for example, a terminal device 2) requests to access a network slice subject to admission control, the first network element checks whether a maximum quantity of terminal devices that access the network slice has already been reached. If the maximum quantity has not been reached, the first network element increases a quantity of terminal devices that have currently accessed the network slice by 1, and adds an identifier of the terminal device 2 to an identifier list of terminal devices that have accessed the network slice.

It can be understood that the first network element described in this application may further perform admission control on the network slice in another method. This is not limited in this application.

For example, the first network element may include a network slice admission control (network slice admission control, NSAC) network element, a network slice admission control function (network slice admission control function, NSACF) network element, or the like. A specific name of the first network element is not limited in this application. The terminal device that has accessed the network slice described in this application may alternatively be understood as a terminal device that has been registered with the network slice. In addition, the quantity of terminal devices that have accessed the network slice described in this application may alternatively be understood as a quantity of users registered with the network slice.

For ease of description, the following describes the method provided in this application by using an example in which the first network element is an NSACF.

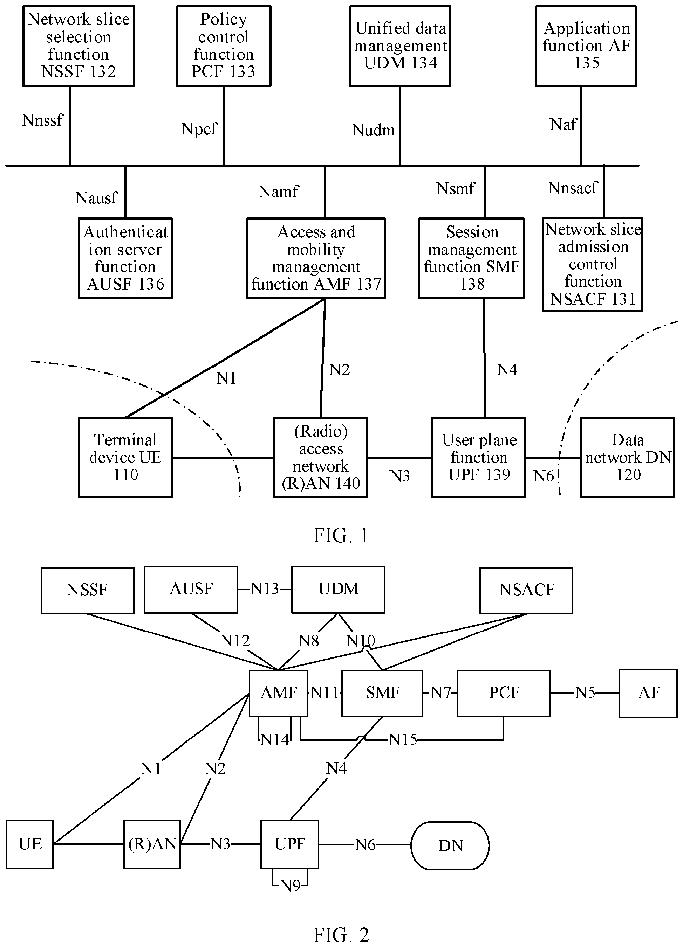

Based on the foregoing communication apparatus, this application further provides a communication system. FIG. 1 is a schematic diagram of a communication system according to an embodiment of this application. A network architecture may include three parts: a terminal device part, a public land mobile network (public land mobile network, PLMN), and a data network (data network, DN). The PLMN described in this application may be specifically a network compliant with a specification of the 3rd generation partnership project (3rd generation partnership project, 3GPP), which is referred to as a 3GPP network for short. The 3GPP network usually includes but is not limited to a 5th generation (5th-generation, 5G) network (5G network for short), a 4th generation (4th-generation, 4G) network (4G network for short), and the like. A data network DN 120 may also be referred to as a packet data network (packet data network, PDN), and is usually a network, for example, a third-party network, outside the PLMN. For example, the PLMN may access a plurality of data networks DNs 120, and a plurality of services may be deployed in the data networks DNs 120, to provide services such as a data service and/or a voice service for a terminal device 110.

As shown in FIG. 1, the PLMN may include: an NSACF 131, a network slice selection function (network slice selection function, NSSF) 132, a policy control function (policy control function, PCF) 133, a unified data management (unified data management, UDM) 134, an application function (application function, AF) 135, an authentication server function (authentication server function, AUSF) 136, an access and mobility management function (access and mobility management function, AMF) 137, a session management function (session management function, SMF) 138, a user plane function (user plane function, UPF) 139, a (radio) access network ((radio) access network, (R)AN) 140, and the like. In the PLMN, a part other than the (radio) access network 140 part may be referred to as a part of a core network (core network, CN) or a core network part.

The unified data management UDM 134 is a control plane function provided by an operator, and is responsible for storage of subscriber permanent identifiers (subscriber permanent identifier, SUPI), security context (security context), subscription data, and the like for subscribers in the PLMN. The subscriber in the PLMN may be specifically a subscriber using a service provided by the PLMN, for example, a subscriber using a terminal device SIM card of China Telecom, or a subscriber using a terminal device SIM card of China Mobile. For example, the SUPI of the subscriber may be a number of the terminal device SIM card. The security context may be a cookie (cookie), a token (token), or the like stored in a local terminal device (for example, a mobile phone). The subscription data of the subscriber may be a supporting service of the terminal device SIM card, for example, a traffic package of the mobile phone SIM card.

In this application, the subscription data may include information about a subscribed network slice (which may also be referred to as subscribed S-NSSAI). The subscription data may further include eighth indication information. The eighth indication information may indicate whether the subscribed S-NSSAI included in the subscription data is a default subscribed network slice (which may also be referred to as default subscribed S-NSSAI). Alternatively, it may be understood that the default subscribed network slice and the subscribed network slice may be distinguished based on the eighth indication information. In other words, the default subscribed S-NSSAI may be understood as one of the subscribed S-NSSAI, and is also a subscribed network slice. However, the default subscribed S-NSSAI may be used as a default slice. Optionally, the subscription data may further include first indication information. The first indication information indicates to allow the UE to access the default subscribed network slice when a quantity of UEs that access a network slice subject to admission control in a network slice that a UE requests to access is greater than or equal to a first threshold. It may be understood that the subscription data of the subscriber may also be referred to as subscription data of the LTE, subscription information of the UE, or the like. A specific name of the subscription data is not limited in this application.

It may be understood that, for a specific implementation of another network function in the PLMN shown in FIG. 1, refer to a related protocol or standard. Details are not described in this application.

Nnsacf, Nnssf, Nausf, Npcf, Nudm, Naf, Namf, Nsmf, N1, N2, N3, N4, N6, and the like in FIG. 1 are interface sequence numbers. For example, for meanings of the interface sequence numbers, refer to meanings defined in the 3GPP standard protocol. The meanings of the interface sequence numbers are not limited in this application. It should be noted that, in FIG. 1, an example in which the terminal device 110 is the UE is merely used for description. Names of interfaces between the network functions in FIG. 1 are also merely examples. During specific implementation, the names of the interfaces in the system architecture may be other names. This is not limited in this application.

The network architecture (for example, a 5G network architecture) shown in FIG. 1 uses a service-based architecture and a service-based interface. The method described in this application is further applicable to a point-to-point interface, as shown in FIG. 2. It may be understood that N1, N2, N3, N4, N5, N6, N7, N8, N10, N11, N12, N13, N15, N22, N58, N59, N60, N61, and the like shown in FIG. 2 are interface sequence numbers. For example, for meanings of the interface sequence numbers, refer to meanings defined in the 3GPP standard protocol. The meanings of the interface sequence numbers are not limited in this application.

It may be understood that communication systems shown in FIG. 1 and FIG. 2 are merely examples. For example, the communication system may further include a network exposure function (network repository function, NRF), a network slice authentication and authorization function (network slice-specific authentication and authorization function, NSSAAF), or the like. A specific architecture of the communication system is not limited in this application.

### 4. Network slicing

Slicing is simply understood as slicing a physical network of an operator into a plurality of virtual end-to-end networks. These virtual networks (including devices, an access network, a transport network, and a core network in the networks) are logically independent, so that a fault occurring on any one of the virtual networks does not affect the remaining of the virtual networks. To meet diversified requirements and slice isolation, independent management and operation and maintenance are required for services, and customized service functions and analysis capabilities are provided. Instances of different service types may be deployed on different network slices, or different instances of a same service type may be deployed on different network slices. A slice may include a group of network functions (network functions, NFs), a subnet, and/or the like. For example, a slice may include a subnet (R)AN 140, an AMF 137, an SMF 138, and a UPF 139 in FIG. 1. It may be understood that merely one network function of each type is schematically illustrated in FIG. 1. During actual network deployment, there may be a plurality of, dozens of, or hundreds of network functions or subnets of each type. A plurality of slices may be deployed in a PLMN. Each slice may have different performance to meet requirements of different applications and vertical industries.

### 5. Single network slice selection assistance information (single network slice selection assistance information, S-NSSAI)

A network slice may be identified using the S-NSSAI. The S-NSSAI may be distinguished based on a slice/service type (slice/service type, SST), or the S-NSSAI may include the SST and a slice differentiator (slice differentiator, SD). For example, the SST is used for describing a feature, a service characteristic, and the like that are of a slice. The SD is used for distinguishing between different network slices with a same SST feature.

### 6. Network slice selection assistance information (network slice selection assistance information, NSSAI)

The NSSAI is a set of S-NSSAI, and a set of one or more network slices may be identified using the NSSAI. For example, identification information of a network slice that a UE requests to access may be referred to as requested NSSAI or requested S-NSSAI. For another example, identification information of an allowed network slice that is carried in a registration accept message may be referred to as allowed NSSAI or allowed S-NSSAI.

It may be understood that for descriptions of the network slice, refer to a related standard, protocol, or the like. This is not limited in this application. The foregoing descriptions of terms are also applicable to embodiments shown below. For brevity of an application document, details are not described below again.

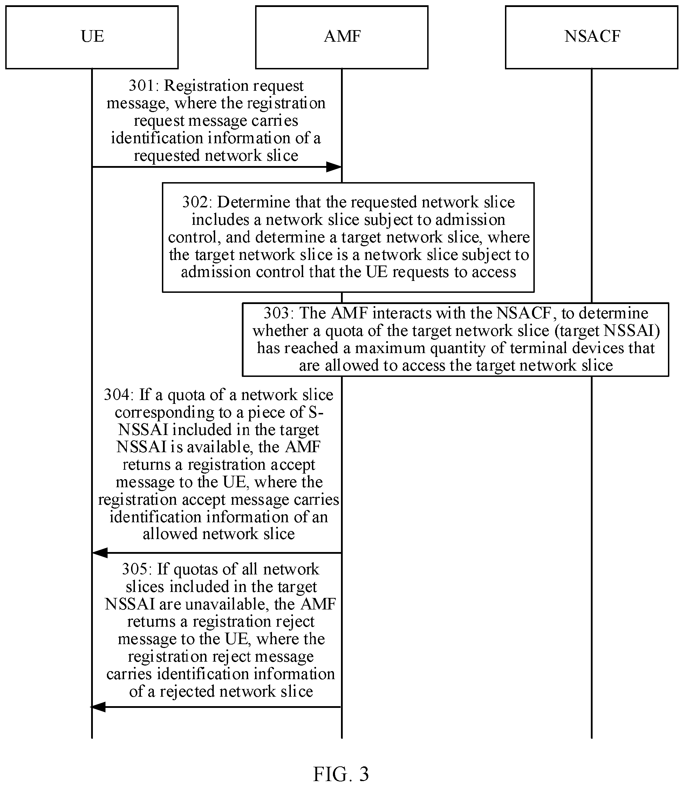

In a deployment scenario of slicing, due to a network resource limitation and the like, a quantity of users registered with a slice is limited. For example, in an enhanced mobile broadband (enhanced mobile broadband, eMBB) service, a slice can support access of a maximum of 10 million users (UEs), while in a V2X service, a slice can support access of a maximum of 2 million users. If a quantity of accessing users exceeds this quantity, a service level agreement (service level agreement, SLA) of the slice cannot be ensured. Therefore, an NSACF needs to control a quantity of UEs that access a network slice. FIG. 3 is a schematic flowchart of a network slice admission control method according to an embodiment of this application. The method includes the following steps.

301: A UE sends a registration request message to an AMF, where the registration request message carries identification information of a requested network slice. Correspondingly, the AMF receives the registration request message.

The identification information of the requested network slice may also be referred to as requested network slice selection assistance information (requested NSSAI).

302: The AMF determines that the requested network slice includes a network slice subject to admission control, and determines a target network slice, where the target network slice is a network slice subject to admission control that the UE requests to access.

The target network slice may also be referred to as target NSSAI (target NSSAI). For example, the target network slice may be a set of slices subject to network slice admission control (network slice admission control) that the UE requests access. For example, if the requested NSSAI = {1, 2, 3} and network slices {1, 2, 3} all are subject to admission control, the AMF determines that the target NSSAI = {1, 2, 3}.

303: The AMF interacts with an NSACF, to determine whether a quota of the target network slice (target NSSAI) has reached a maximum quantity of terminal devices that are allowed to access the target network slice.

For example, the AMF may send a request message to the NSACF, where the request message carries the target NSSAI, and the request message requests the NSACF to check whether a quantity of terminal devices that have currently accessed a network slice corresponding to each piece of S-NSSAI included in the target NSSAI has exceeded the maximum value.

304: If a quota of a network slice corresponding to a piece of S-NSSAI included in the target NSSAI is available, to be specific, a quantity of terminal devices that have currently accessed the network slice corresponding to the piece of S-NSSAI included in the target NSSAI has not exceeded the maximum value, the AMF returns a registration accept message to the UE, where the registration accept message carries identification information of an allowed network slice, and the identification information of the allowed network slice includes the S-NSSAI.

For each network slice in the target network slice, when the NSACF determines that a quantity of UEs that have currently accessed the network slice has not exceeded a maximum quantity, the NSACF may perform user quantity counting on the network slice (that is, increase a quantity of users that access the network slice by 1). In addition, optionally, the NSACF returns indication information 1 to the AMF. The indication information 1 may indicate that the quantity of terminal devices that have currently accessed the network slice has not reached the maximum value, or indicate that the network slice has a quota available (quota available), so that the AMF includes identification information of the network slice in the registration accept message. In other words, the network slice having the quota available is the allowed network slice, and the identification information of the allowed network slice may also be referred to as allowed NSSAI (allowed NSSAI).

305: If quotas of all network slices included in the target NSSAI are unavailable, to be specific, a quantity of terminal devices that have currently accessed a network slice corresponding to a piece of S-NSSAI included in the target NSSAI have exceeded the maximum value, the AMF returns a registration reject message to the UE, where the registration reject message carries identification information of a rejected network slice, and the identification information of the rejected network slice includes the S-NSSAI.

In other words, the NSACF returns indication information 2 to the AMF. The indication information 2 indicates that the quantity of terminal devices that have currently accessed the network slice in the target NSSAI reaches the maximum value or indicates that a quota of the network slice is unavailable. In this way, the AMF includes, in the registration reject message, the network slice that does not have a quota available. To be specific, the network slice that does not have the quota available is the rejected network slice, and the identification information of the rejected network slice may also be referred to as rejected NSSAI (rejected NSSAI).

The quota of the network slice described in this application may alternatively be understood as: a quantity of UEs that access the network slice, a quantity of users that are allowed to access the network slice, or a quantity of users that register with the network slice. That the quota of the network slice is unavailable, or the quota of the network slice exceeds a limit, or the quantity of UEs that access the network slice exceeds a quota may be understood as follows: The quantity of UEs that access the network slice exceeds the maximum value, or the quantity of UEs that access the network slice has reached a maximum quantity of UEs that are allowed to access the network slice, or the quantity of UEs that access the network slice is greater than or equal to a first threshold, or a quantity of UEs that have accessed the network slice is greater than or equal to the first threshold. That the quota of the network slice is available may be understood as follows: The quantity of UEs that access the network slice has not exceeded the maximum quantity, or the quantity of UEs that access the network slice has not reached the maximum quantity of UEs that are allowed to access the network slice, or the quantity of UEs that access the network slice is less than the first threshold.

The admission control (admission control) described in this application may also be referred to as access control (access control) or the like. A name of the admission control is not limited in this application.

It may be understood that the foregoing descriptions of the quota of the network slice, the admission control, and the like are also applicable to the following descriptions. For brevity of an application document, the following describes the method provided in this application by using an example in which the quantity of UEs that access the network slice is greater than or equal to the first threshold.

It may be understood that, in this application, although the first threshold is used for measuring whether a LTE is further allowed to access a network slice subject to admission control in a network slice that the UE requests to access, when there are two or more network slices subj ect to admission control in the network slice that the LTE requests to access, whether first thresholds corresponding to the two or more network slices are the same is not limited in this application. In other words, if network slices subj ect to admission control in the network slice that the UE requests to access are a network slice 1 and a network slice 2, a first threshold used for measuring the network slice 1 may be different from a first threshold used for measuring the network slice 2.

It may be learned from the method shown in FIG. 3 that, when the quantity of UEs that access the network slice subject to admission control in the network slice that the UE requests to access is greater than or equal to the first threshold, registration of the UE is unsuccessful. Consequently, this affects a registration procedure of the UE, and the UE cannot effectively access the network slice in time.

In view of this, this application provides a network slice admission control method and an apparatus, to improve accuracy of successful registration of the UE, and enable the UE to access the network slice in time. In this application, all network slices that the UE requests to access are subject to admission control. Alternatively, some of network slices that the UE requests to access are subject to admission control. Therefore, the UE may access network slices not subject to admission control. However, when the LTE requests to access the network slice subject to admission control, if the quantity of UEs that access the network slice subject to admission control is greater than or equal to the first threshold, the UE cannot access the network slice subject to admission control. When the quantity of UEs that access the network slice subject to admission control in the network slice that the LTE requests to access is greater than or equal to the first threshold, a quantity of LTEs that access a default subscribed network slice of the LTE may not reach a second threshold, or the default subscribed network slice is not subject to admission control of the UE. In this case, the UE may access the default subscribed network slice (which may also be referred to as a network slice that is subscribed by default), to improve a case in which the registration of the UE is unsuccessful.

The following first describes the method provided in embodiments of this application in general, then describes the method with reference to various embodiments separately, and finally describes the apparatus provided in embodiments of this application with reference to method embodiments.

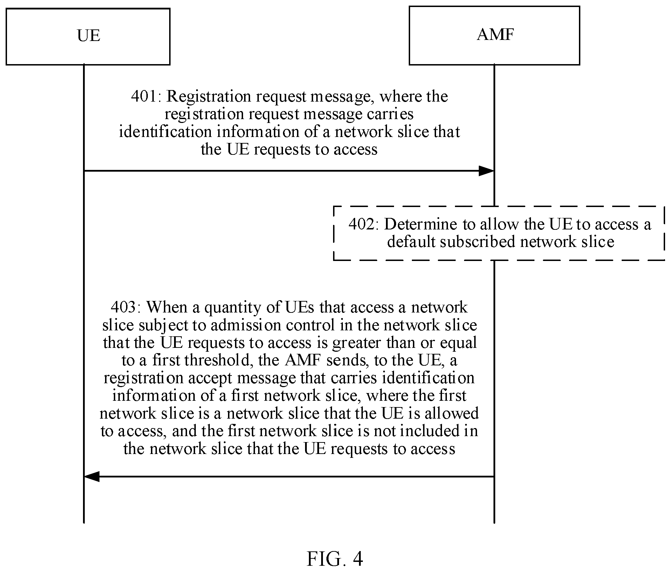

FIG. 4 shows a network slice admission control method according to an embodiment of this application. For example, the method is applicable to the communication system shown in FIG. 1, the communication system shown in FIG. 2, and the like. In this embodiment of this application, a communication system to which the method is applicable is not described again. As shown in FIG. 4, the method includes the following steps.

401: A UE sends a registration request message to an AMF, where the registration request message carries identification information of a network slice that the UE requests to access. Correspondingly, the AMF receives the registration request message.

The LTE may request to access one network slice, or at least two network slices, for example, two or three or more network slices. The identification information of the network slice that the UE requests to access may be referred to as NSSAI (requested NSSAI) that the UE requests to access or S-NSSAI (requested S-NSSAI) that the UE requests to access.

In a possible implementation, before the AMF sends, to the UE, a registration accept message that carries identification information of a first network slice, the method shown in FIG. 4 further includes:
The AMF determines a network slice subject to admission control in the network slice that the UE requests to access.

For example, the AMF may determine, in the following method, the network slice subject to admission control in the network slice that the UE requests to access. 1. The AMF is configured with identification information of a network slice subject to admission control. To be specific, the AMF locally configures the identification information of the network slice subject to admission control. Therefore, the AMF may determine, from the identification information of the network slice that the LTE requests to access, whether the identification information of the network slice subject to admission control is included. 2. Subscription data of the UE indicates identification information of a network slice subject to admission control. To be specific, the AMF may determine, based on the subscription data of the UE, whether the network slice that the UE requests to access includes the identification information of the network slice subject to admission control. In this embodiment of this application, a method in which the AMF determines, from the network slice that the LTE requests to access, the network slice subject to admission control is not limited. It may be understood that the foregoing descriptions are also applicable to a method for determining whether admission control needs to be performed on a default subscribed network slice, and details are not described below.

403: When a quantity of UEs that access the network slice subject to admission control in the network slice that the UE requests to access is greater than or equal to a first threshold, the AMF sends, to the UE, the registration accept message that carries the identification information of the first network slice, where the first network slice is a network slice that the LTE is allowed to access. Correspondingly, the UE receives the registration accept message.

The first network slice may be a default subscribed network slice (default subscribed S-NSSAI) of the UE. It may alternatively be understood that the first network slice is included in the default subscribed network slice of the UE. For example, the identification information of the first network slice may be included in allowed NSSAI in the registration accept message. Optionally, because a quantity of UEs that access the network slice that the UE requests to access is greater than or equal to the first threshold (which has exceeded a maximum quantity of LTEs that are allowed to access the network slice), identification information of a network slice that the UE requests to access and whose quantity of accessing LTEs is greater than or equal to the first threshold may be included in rejected NSSAI (rejected NSSAI) in the registration accept message. It may be understood that, in the network slice subject to admission control in the network slice that the UE requests to access, first thresholds corresponding to various network slices respectively may be different. Therefore, that the quantity of UEs that access the network slice subject to admission control in the network slice that the UE requests to access is greater than or equal to the first threshold may alternatively be understood as follows: A quantity of UEs that access each network slice subject to admission control in the network slice that the UE requests to access is greater than or equal to a first threshold corresponding to the network slice. It may be understood that the first network slice is not included in the network slice that the UE requests to access.

In a possible implementation, the method shown in FIG. 4 may further include the following step.

402: The AMF determines to allow the LTE to access the default subscribed network slice.

For example, before the AMF sends the registration accept message to the UE, the AMF determines to allow the LTE to access the default subscribed network slice. Identification information of the default subscribed network slice may be referred to as default subscribed NSSAI or default subscribed S-NSSAI.

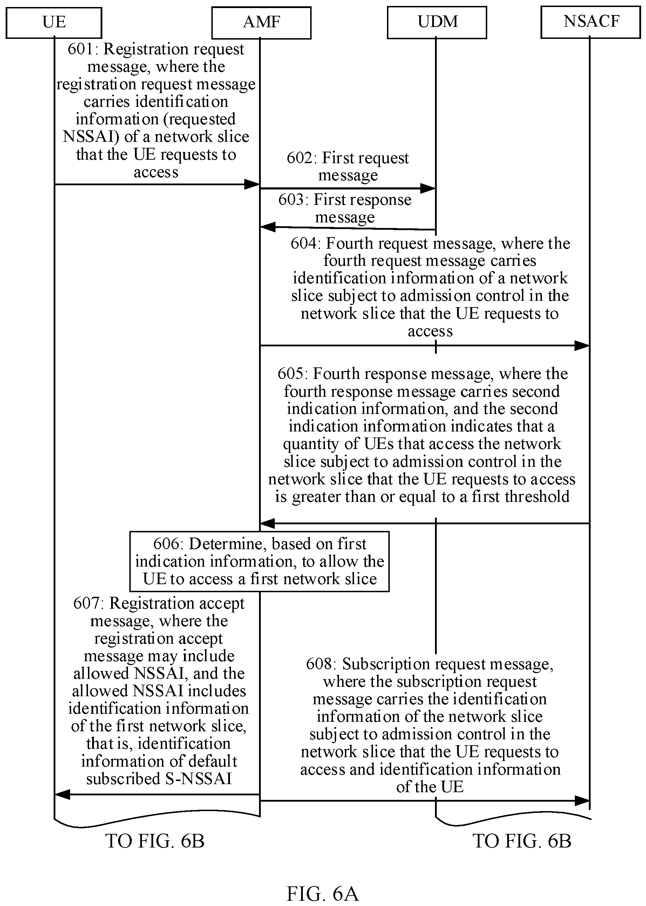

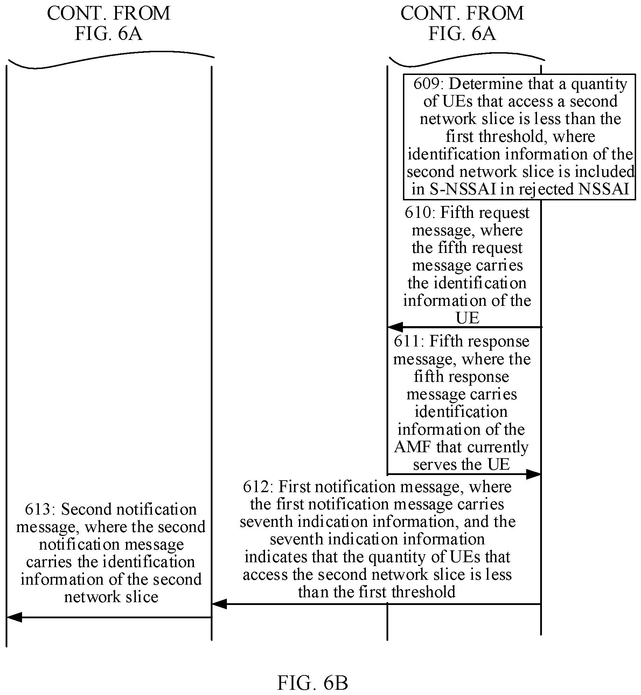

For example, the default subscribed network slice is not subject to admission control. In other words, the first network slice is the default subscribed network slice not subject to admission control. Therefore, step 402 may alternatively be replaced with the following step: The AMF determines at least one first network slice from one or more default subscribed network slices. For example, the AMF may determine one default subscribed network slice from a plurality of default subscribed network slices as the first network slice. It may be understood that for descriptions of this implementation, refer to the following descriptions about FIG. 6A and FIG. 6B. Details are not described herein.

For example, admission control needs to be performed on the default subscribed network slice. In other words, the first network slice is the default subscribed network slice subject to admission control. For example, there are N default subscribed network slices of the UE, and N is an integer greater than or equal to 1. When the AMF interacts with an NSACF, the AMF may send identification information of one or M or N default subscribed network slices to the NSACF, where M is an integer greater than 1 and less than N. Based on whether a quantity of UEs that have accessed each network slice is less than a second threshold, the NSACF sends, to the AMF, identification information of a default subscribed network slice whose quantity of accessing UEs is less than the second threshold, and the AMF determines, at least one first network slice from the default subscribed network slice whose quantity of accessing LTEs is less than the second threshold. For another example, based on the quantity of UEs that have accessed each network slice, the NSACF may alternatively determine a network slice that is accessed by a smallest quantity of UEs as the first network slice, and send the identification information of the first network slice to the AMF. For another example, a quantity of UEs that access each default subscribed network slice is less than the second threshold, where the quantity of UEs that access each default subscribed network slice is sent by the AMF to the NSACF. In this case, the NSACF may not send identification information of the default subscribed network slice to the AMF. For example, the NSACF sends third indication information to the AMF. For descriptions of the third indication information, refer to the following descriptions. Details are not described herein.

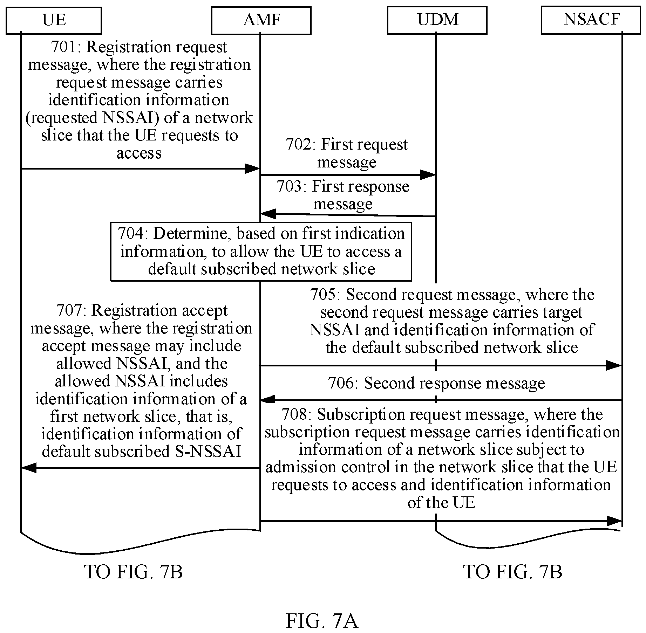

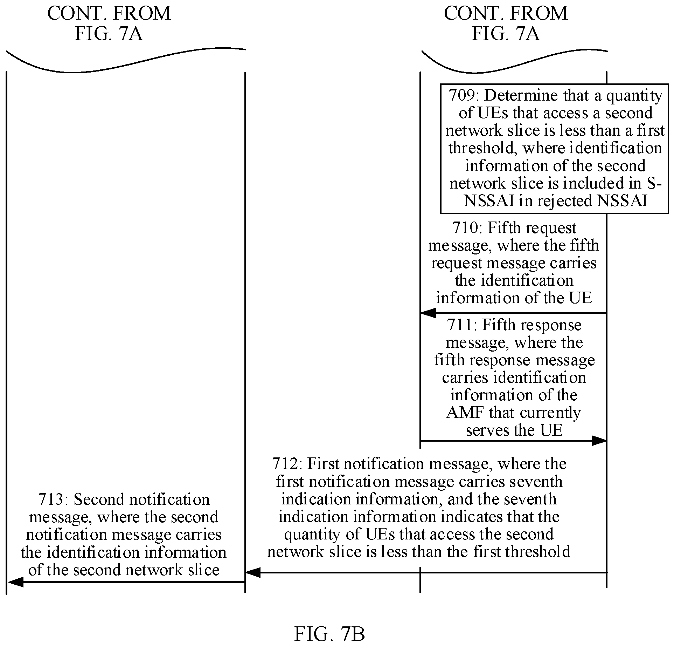

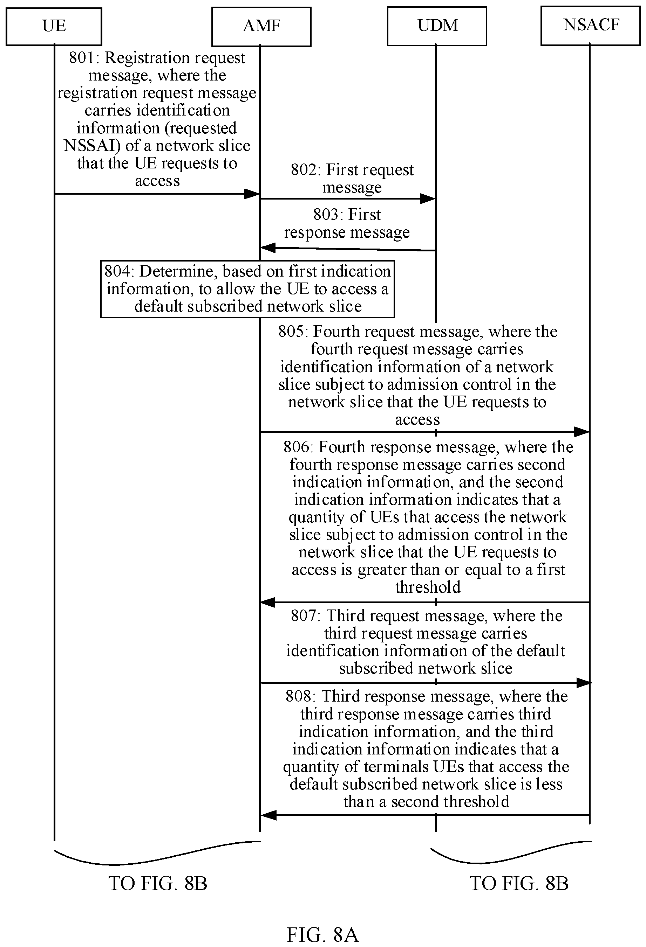

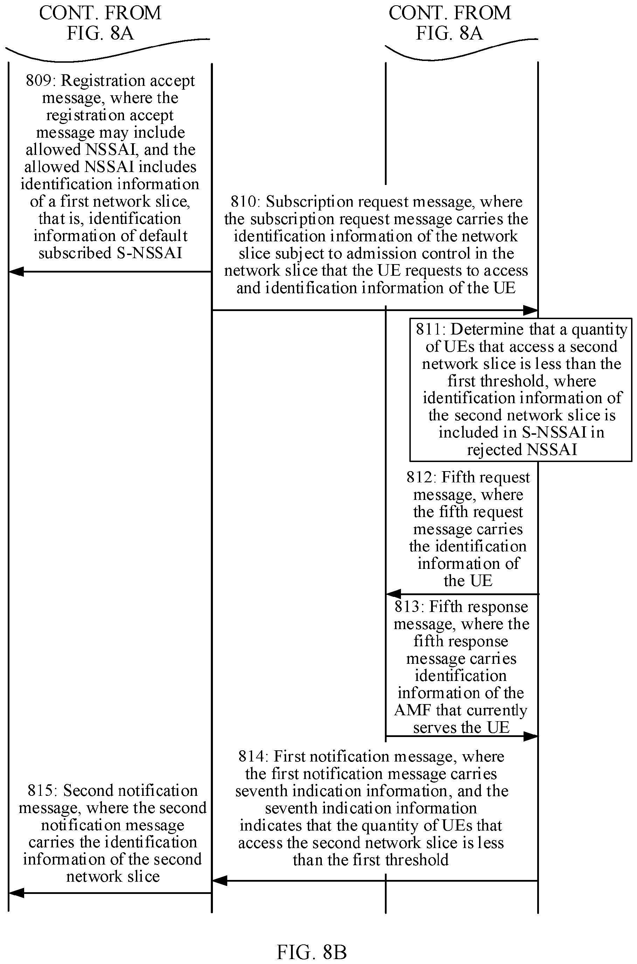

For example, the first network slice is a network slice, in the plurality of default subscribed network slices, whose quantity of accessing LTEs is less than the second threshold. Alternatively, if there are at least two network slices, in the plurality of default subscribed network slices, whose quantities of accessing UEs are less than the second threshold, the first network slice is any one of the at least two network slices. Alternatively, the first network slice is a network slice in the plurality of default subscribed network slices that is accessed by a smallest quantity of UEs. It may be understood that for descriptions of this implementation, refer to the following descriptions about FIG. 7A and FIG. 7B or FIG. 8A and FIG. 8B. Details are not described herein.

It may be understood that the registration accept message may include one first network slice, or may include two or more first network slices. For example, when a plurality of first network slices are allowed to be fed back to the UE, the registration accept message may include two or more first network slices. Therefore, in this embodiment of this application, a quantity of first network slices that is determined by the AMF (or the NSACF) and a quantity of first network slices that is carried in the registration accept message are not limited. For ease of description, the following describes the method provided in embodiments of this application by using an example in which the registration accept message carries one first network slice.

In this embodiment of this application, even if a quantity of terminal devices that access a network slice subject to admission control in a network slice that a terminal device requests is greater than or equal to the first threshold, the terminal device can still access the network slice, for example, the first network slice. Therefore, not only registration of the terminal device is successful, but also it can be ensured that the terminal device can perform service communication and the like in time via the first network slice.

It should be noted that, when admission control needs to be performed on the default subscribed network slice, and a quantity of UEs that access each default subscribed network slice of the UE is greater than or equal to the second threshold, the AMF may also return a registration reject message to the UE. The registration reject message includes a reject cause value and a back off timer (back off timer). In this case, it indicates that the UE cannot access the network slice subject to admission control in the network slice that the LTE requests to access, and the UE cannot access the default subscribed network slice of the UE. Therefore, the LTE can initiate a registration request again only after the back off timer expires.

The following describes in detail three implementations in which the AMF determines to allow the UE to access the default subscribed network slice.

### Implementation 1

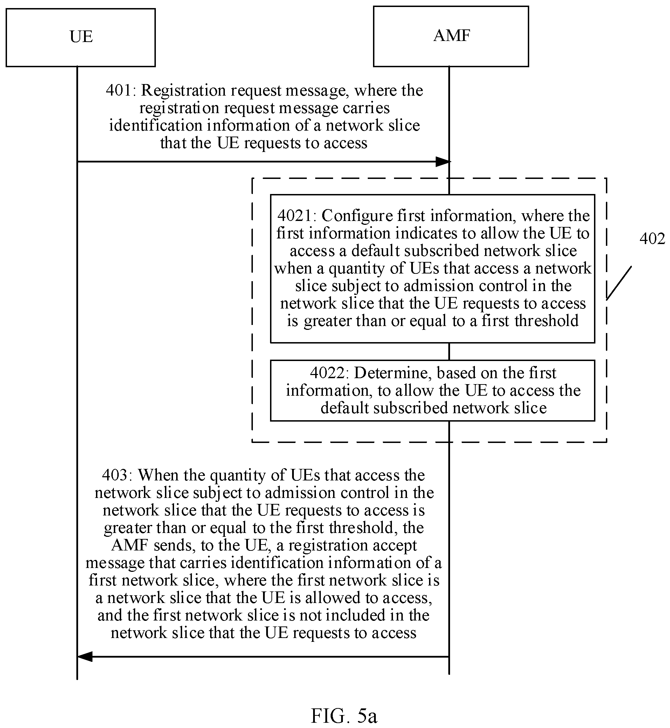

FIG. 5a is a schematic flowchart of a method for determining to allow a UE to access a default subscribed network slice according to an embodiment of this application. As shown in FIG. 5a, the method includes the following steps.

4021: An AMF configures first information, where the first information indicates to allow the UE to access the default subscribed network slice when a quantity of UEs that access a network slice subject to admission control in a network slice that the UE requests to access is greater than or equal to a first threshold.

4022: The AMF determines, based on the first information, to allow the UE to access the default subscribed network slice.

In this embodiment of this application, that an AMF configures first information may also be referred to as that the AMF locally configures the first information (or may be referred to as that the AMF configures a policy). The first information indicates to allow the UE to access the default subscribed network slice when the quantity of LTEs that access the network slice subject to admission control in the network slice that the UE requests to access is greater than or equal to the first threshold. In other words, based on the first information or the policy, when the quantity of UEs that access the network slice subject to admission control in the network slice that the UE requests to access is greater than or equal to the first threshold, the AMF may not send a registration reject message to the UE. Instead, it is determined, based on the first information or the policy, to allow the UE to access the default subscribed network slice. If admission control needs to be performed on the default subscribed network slice, the first information may alternatively be understood as follows: The first information indicates to further determine, when the quantity of UEs that access the network slice subject to admission control in the network slice that the UE requests to access is greater than or equal to the first threshold, whether a quantity of UEs that currently access the default subscribed network slice is less than a second threshold. Whether the UE can access the default subscribed network slice needs to be determined based on whether a quantity of UEs that access the default subscribed network slice is less than the second threshold.

For example, the first information may include first indication information. The first indication information indicates to allow the UE to access the default subscribed network slice when the quantity of LTEs that access the network slice subject to admission control in the network slice that the UE requests to access is greater than or equal to the first threshold. It may be understood that, in addition to the first indication information, the first information may further include identification information of one or more default subscribed network slices (for example, default subscribed S-NSSAI or default subscribed NSSAI).

### Implementation 2

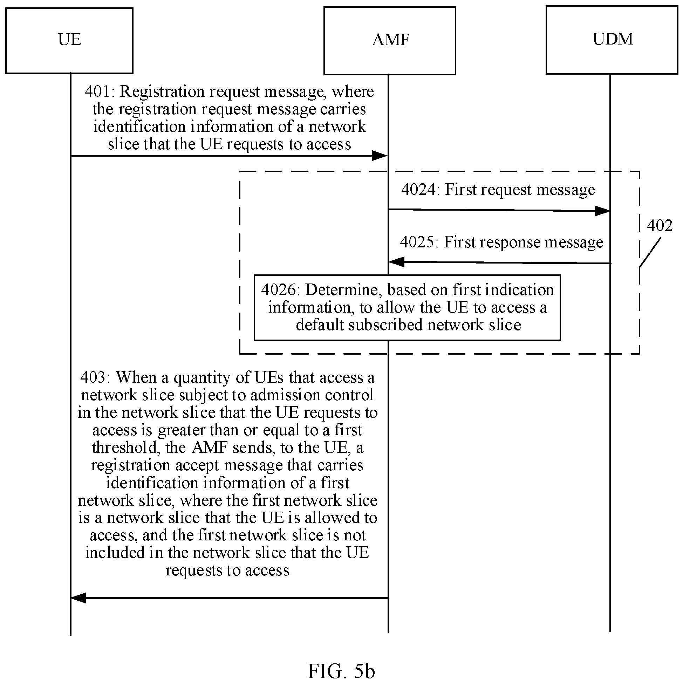

FIG. 5b is a schematic flowchart of another method for determining to allow a UE to access a default subscribed network slice according to an embodiment of this application. As shown in FIG. 5b, the method includes the following steps.

4024: An AMF sends a first request message to a UDM, and correspondingly, the UDM receives the first request message.

4025: The UDM sends a first response message to the AMF, and correspondingly, the AMF receives the first response message.

For example, the first response message carries identification information of a first network slice. Alternatively, the first response message carries identification information of one or more default subscribed network slices. In this case, the AMF may determine to allow the LTE to access a network slice carried in the first response message. In other words, when the AMF requests a default subscribed network slice from the UDM, the AMF may determine, by default based on the default subscribed network slice in the first response message, to allow the LTE to access.

For example, the first response message carries the identification information of the first network slice and first indication information. The first indication information indicates to allow the UE to access the default subscribed network slice when a quantity of UEs that access a network slice subject to admission control in a network slice that the UE requests to access is greater than or equal to a first threshold. Alternatively, the first response message carries identification information of a plurality of default subscribed network slices and the first indication information. In other words, the AMF may clearly learn, based on the first indication information, that the UE can access the default subscribed network slice.

For example, the first response message may alternatively carry subscription information of the UE, and the subscription information of the UE includes identification information of one or more default subscribed network slices and first indication information. Therefore, the AMF may obtain the one or more default subscribed network slices (for example, the first network slice) from the subscription information of the UE.

4026: The AMF determines, based on the first indication information, to allow the UE to access the default subscribed network slice.

It may be understood that the UDM in the implementation 2 may be another network element, for example, an NSSF or a PCF. A network element stores identification information of a default subscribed network slice of the UE and/or the first indication information. The AMF can obtain the identification information of the default subscribed network slice of the UE and/or the first indication information from the network element. The network element falls within the protection scope of embodiments of this application.

### Implementation 3

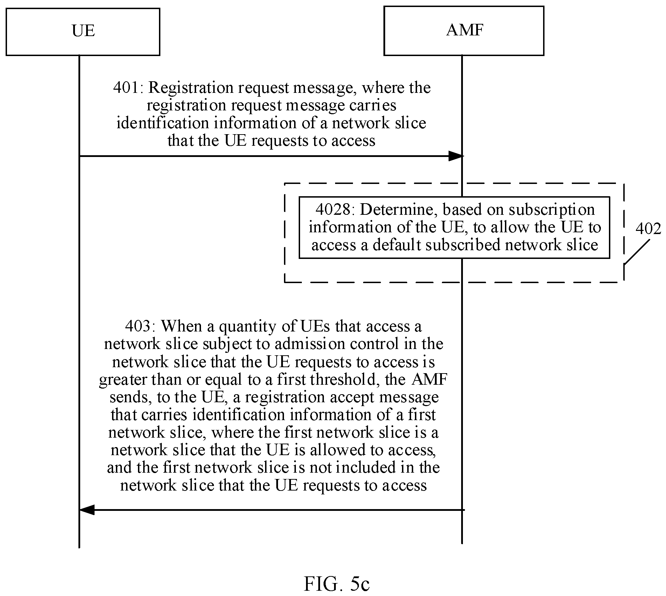

FIG. 5c is a schematic flowchart of still another method for determining to allow a UE to access a default subscribed network slice according to an embodiment of this application. As shown in FIG. 5c, the method includes the following step.

4028: An AMF determines, based on subscription information of the UE, to allow the UE to access the default subscribed network slice.

The subscription information of the UE includes first indication information. The first indication information indicates to allow the UE to access (or attempt to access) the default subscribed network slice when a quantity of LTEs that access a network slice subject to admission control in a network slice that the UE requests to access is greater than or equal to a first threshold. The subscription information of the UE further includes identification information of the default subscribed network slice.

The subscription information of the LTE may be obtained by the AMF from a UDM. For example, the AMF may obtain the subscription information before step 401, or may obtain the subscription information after step 401, or may obtain the subscription information before step 402. When the AMF obtains the subscription information is not limited in this embodiment of this application. It may be understood that, for descriptions of the subscription information, refer to descriptions in other places. Details are not described herein again.

It may be understood that the foregoing implementation 1 to the implementation 3 may be mutually independent implementations, or may be combined. For example, the implementation 1 and the implementation 2 are combined. For another example, the implementation 2 and the implementation 3 are combined. To be specific, different implementations are combined with each other, to ensure that the AMF can effectively determine to allow the UE to access the default subscribed network slice. For a combination of the different implementations, refer to FIG. 6A and FIG. 6B to FIG. 8A and FIG. 8B shown below. Details are not described herein.

FIG. 6A and FIG. 6B are a schematic flowchart of a network slice admission control method according to an embodiment of this application. As shown in FIG. 6A and FIG. 6B, the method includes the following steps.

601: A UE sends a registration request message to an AMF, and correspondingly, the AMF receives the registration request message. The registration request message carries identification information (requested NSSAI) of a network slice that the UE requests to access.

602: The AMF sends a first request message to a UDM, and correspondingly, the UDM receives the first request message.

603: The UDM sends a first response message to the AMF, and correspondingly, the AMF receives the first response message.

In this embodiment of this application, the AMF may obtain subscription information of the UE (which may also be referred to as subscription data of the UE) by performing step 602 and step 603. The subscription information of the LTE may include identification information of a default subscribed network slice. In this case, in an implementation, first indication information may be predefined (that is, configured on the AMF). To be specific, the subscription information of the UE does not include the first indication information, and the AMF allows the UE to access the default subscribed network slice. Alternatively, the subscription information of the UE may include identification information of a first network slice and the first indication information. In this embodiment of this application, the first indication information may indicate that the first network slice is not subject to admission control. As shown in Table 1, the subscription information of the UE may include identification information (subscribed S-NSSAI or subscribed NSSAI) of a network slice to which the UE subscribes, and some network slices to which the UE subscribes may be marked as default subscribed network slices. With reference to eighth indication information shown above, when a subscribed network slice includes the eighth indication information, the subscribed network slice may also be referred to as a default subscribed network slice. Table 1 further shows the first indication information in the subscription information. To be specific, the first indication information indicates to allow the UE to access the default subscribed network slice when a quantity of UEs that access the network slice that the UE requests has reached a maximum quantity (a maximum value).

It may be understood that for descriptions of the first response message, refer to the foregoing descriptions about FIG. 5b.

Step 602 and step 603 may alternatively be understood as follows: The AMF obtains the subscription information of the UE from the UDM via a NuDm_SDM_Get service-based operation request. The UDM invokes a service-based operation NuDm_SDM_Get response to return the subscription information of the UE to the AMF.

**Table 1**

| | |
|---|---|
| Subscribed NSSAI | Identification information of the network slice to which the UE subscribes |
| Default subscribed S-NSSAI (or NSSAI) | Marked default subscribed S-NSSAI (or NSSAI) |
| Default S-NSSAI that is allowed to access by UE if the max number of UEs per S-NSSAI for that network slice has already been reached | When the quantity of LTEs that access the network slice that the UE requests has reached the maximum quantity, the UE can access the default subscribed S-NSSAI (or NSSAI). |

It may be understood that step 602 and step 603 are merely examples. For example, the AMF may obtain a default subscribed network slice of the UE based on configured first information. For descriptions of the first information, refer to the foregoing descriptions. Details are not described herein again.

For example, the AMF may determine, in the following method, a network slice subject to admission control in the network slice that the UE requests to access. 1. The AMF is configured with identification information of a network slice subject to admission control. 2. Subscription data of the LTE indicates identification information of a network slice subject to admission control. In this embodiment of this application, for a method for determining the network slice subject to admission control in the network slice that the LTE requests to access, refer to the method shown in FIG. 4. Details are not described herein again.

For ease of description, the following uses target NSSAI to replace identification information of the network slice subject to admission control in the network slice that the UE requests to access.

604: The AMF sends a fourth request message to an NSACF, and correspondingly, the NSACF receives the fourth request message. The fourth request message carries the identification information of the network slice subject to admission control in the network slice that the UE requests to access.

605: The NSACF sends a fourth response message to the AMF, and correspondingly, the AMF receives the fourth response message. The fourth response message carries second indication information. The second indication information indicates that a quantity of UEs that access the network slice subject to admission control in the network slice that the LTE requests to access is greater than or equal to a first threshold.

In this way, the AMF may learn, based on the second indication information, that the quantity of UEs that access the network slice subject to admission control in the network slice that the UE requests has reached the maximum quantity (which is greater than or equal to the first threshold, or has reached the maximum value), and the UE cannot access the network slice. Further, the AMF performs step 606 and step 607, so that the UE accesses the first network slice.

It may be understood that step 604 and step 605 may alternatively be understood as follows: The AMF invokes a service-based operation, for example, Nnsacf_NSQuotaAvailabilityCheck_Request, of the NSACF. The service-based operation carries target S-NSSAI(s). The NSACF determines, based on a locally configured maximum quantity of UEs that are allowed to access each network slice (max number of UEs per network slice), whether a quantity of UEs that access each network slice in the target S-NSSAI(s) is greater than or equal to the first threshold. In addition, the NSACF invokes a service-based operation Nnsacf_NSQuotaAvailabilityCheck_Response to return, to the AMF, whether the quantity of UEs that access each network slice in the target S-NSSAI(s) is greater than or equal to the first threshold (which may also be referred to as a quota check result of each network slice in the target S-NSSAI).

In an implementation, the fourth response message may also carry the quantity of UEs that access each network slice in the target NSSAI.

It may be understood that step 604 and step 605 may be performed after step 602 and step 603. To be specific, the AMF may obtain the subscription information of the UE before obtaining the second indication information. Alternatively, step 604 and step 605 may be performed before step 602 and step 603. To be specific, the AMF may obtain the subscription information of the LTE after obtaining the second indication information.

606: The AMF determines, based on the first indication information, to allow the UE to access the first network slice.

In this embodiment of this application, after step 602 and step 603, the AMF may determine, based on the first indication information in the first response message, to allow the UE to access the first network slice; and then, perform step 604 or step 605. Alternatively, after step 602 and step 603, the AMF may store the subscription information of the UE (or store the first indication information, or the like). Then, after step 604 and step 605, the AMF determines, based on the subscription information of the UE, to allow the UE to access the first network slice. Alternatively, the AMF may not obtain the first indication information by performing step 602 and step 603, but determine, based on the locally configured first information, to allow the UE to access the first network slice. It may be understood that for specific descriptions in which the AMF determines to allow the UE to access the first network slice, refer to FIG. 5a to FIG. 5c. Details are not described herein again.

607: The AMF sends a registration accept message to the UE, and correspondingly, the UE receives the registration accept message.

For example, the registration accept message may include allowed NSSAI, and the allowed NSSAI includes the identification information of the first network slice, that is, identification information of the default subscribed S-NSSAI. Optionally, the registration accept message may further include rejected NSSAI, and the rejected NSSAI includes identification information of a network slice (including a second network slice), in the network slice that the UE requests to access, whose quantity of accessing UEs is greater than or equal to the first threshold. 608: The AMF sends a subscription request message to the NSACF, and correspondingly, the NSACF receives the subscription request message. The subscription request message carries identification information (for example, S-NSSAI or NSSAI) of one or more of network slices subject to admission control in the network slice that the UE requests to access and identification information of the UE.

The subscription request message may carry the identification information of the one or more network slices, and the one or more network slices may be understood as: The network slice subject to admission control in the network slice that the UE requests to access, where the quantity of UEs that access each network slice is greater than or equal to the first threshold. Alternatively, the one or more network slices may be understood as: one or more network slices in the rejected NSSAI carried in the registration accept message. It may be understood that the one or more network slices include the second network slice.

In other words, the subscription request message may carry identification information of one network slice, for example, identification information of the second network slice. For another example, the subscription request message may carry identification information of a plurality of network slices, and the identification information of the plurality of network slices includes the identification information of the second network slice. It may be understood that conditions that the one or more network slices meet may be shown above. Details are not described herein again.

Step 608 may alternatively be understood as follows: The AMF invokes a service-based operation, for example, Nnsacf_NSQuotaAvailability_Subscribe. The service-based operation carries the identification information of the LTE (for example, a LTE ID) and identification information (for example, S-NSSAI in rejected NSSAI for short) of a network slice subject to admission control whose quantity of accessing LTEs is greater than or equal to the first threshold and that is in the network slice that the UE requests to access. For example, with the service-based operation, the AMF may subscribe to, from the NSACF, an event (for example, which may also be referred to as a quota available event) in which a quantity of UEs that access one or more network slices (including the second network slice) in the rejected NSSAI is less than the first threshold.

609: The NSACF determines that a quantity of UEs that access the second network slice is less than the first threshold.

When it is determined that the quantity of UEs that access the second network slice is less than the first threshold (that is, a quota is available), the NSACF notifies the AMF that currently serves the UE, so that the UE can access the second network slice.

610: The NSACF sends a fifth request message to the UDM, and correspondingly, the UDM receives the fifth request message. The fifth request message carries the identification information of the UE.

611: The UDM sends a fifth response message to the NSACF, and correspondingly, the NSACF receives the fifth response message. The fifth response message carries identification information of the AMF that currently serves the UE.

Steps 610 and 611 may alternatively be understood as follows: The NSACF invokes a service-based operation, for example, Nudm_UECM_Get, of the UDM. The service-based operation carries the LTE ID and AMF registration indication information. The AMF registration indication information is used for searching the UDM for an AMF with which the UE is registered. In other words, the NSACF may query, with the service-based operation, the UDM for the identification information of the AMF that currently serves the UE.

612: The NSACF sends, a first notification message to the AMF that currently serves the UE, where the first notification message carries seventh indication information; and correspondingly the AMF that currently serves the UE receives the first notification message. The first notification message carries the seventh indication information, and the seventh indication information indicates that the quantity of UEs that access the second network slice is less than the first threshold.

For example, when the subscription request message carries identification information of one network slice, for example, the identification information of the second network slice, the first notification message may carry the seventh indication information, as shown in step 612.

For example, when the subscription request message carries identification information of a plurality of network slices (including the second network slice), the first notification message may further carry the identification information of the second network slice. In other words, the second network slice may be understood as: the network slice subject to admission control in the network slice that the UE requests to access, where the quantity of UEs that access the second network slice is greater than or equal to the first threshold. After a period of time, the quantity of UEs that access the second network slice is less than the first threshold. In other words, after the period of time, the UE may access the second network slice. It may be understood that, if the NSACF determines that quantities of UEs that access the plurality of network slices are less than the first threshold, that is, the NSACF determines that there are a plurality of second network slices, the first notification message may further carry identification information of the plurality of second network slices.

Step 612 may alternatively be understood as follows: The NSACF invokes Nnsacf_NSQuotaAvailability_Notify to send the first notification message to the AMF that currently serves the UE.

It may be understood that the AMF that currently serves the UE may be the foregoing AMF, or may be another AMF, or the like. This is not limited in this embodiment of this application. In the accompanying drawings, an example in which the AMF that currently serves the UE is the foregoing AMF is used, but the AMF should not be construed as a limitation on this embodiment of this application.

613: The AMF sends a second notification message to the UE, and correspondingly, the UE receives the second notification message. The second notification message carries the identification information of the second network slice.

Step 613 may alternatively be understood as follows: The AMF sends a non-access stratum (non-access stratum, NAS) message to the UE, to notify the LTE that a quantity of LTEs that access a piece of S-NSSAI in the rejected NSSAI in the registration accept message is less than the first threshold, or notify the UE that a quota of a piece of S-NSSAI in the rejected NSSAI in the registration accept message is available.

According to the method shown in step 608 to step 613, when the quantity of LTEs that access the second network slice is less than the first threshold, it can be ensured that the UE can effectively access the second network slice in time. In this way, fairness of accessing a network slice by the UE is further effectively ensured, so that the UE can access a network slice that the UE requests to access.

It may be understood that step 608 to step 613 in FIG. 6A and FIG. 6B are also applicable to methods shown in FIG. 7A and FIG. 7B and FIG. 8A and FIG. 8B. For example, in the method shown in FIG. 7A and FIG. 7B, after step 707, the method shown in FIG. 7A and FIG. 7B may further include step 708 to step 713. For step 708 to step 713, refer to the method shown in step 608 to step 613 shown in FIG. 6A and FIG. 6B. For another example, in the method shown in FIG. 8A and FIG. 8B, after step 809, the method shown in FIG. 8A and FIG. 8B may further include step 810 to step 815. For step 810 to step 815, refer to the method shown in step 608 to step 613 shown in FIG. 6A and FIG. 6B. To avoid repetition, the following does not describe the method shown in step 608 to step 613 in detail.

According to this embodiment of this application, when the quantity of UEs that access the network slice subject to admission control that the UE requests to access is greater than or equal to the first threshold, the UE is allowed to access the default subscribed network slice. In addition, the default subscribed network slice is not subject to admission control. This effectively ensures that the UE can access the default subscribed network slice.

It may be understood that FIG. 6A and FIG. 6B show an example in which the first network slice is not subject to admission control. The following describes, by using an example in which admission control needs to be performed on the first network slice, a method provided in an embodiment of this application.

FIG. 7A and FIG. 7B are a schematic flowchart of a network slice admission control method according to an embodiment of this application. As shown in FIG. 7A and FIG. 7B, the method includes the following steps.

701: A UE sends a registration request message to an AMF, and correspondingly, the AMF receives the registration request message. The registration request message carries identification information (requested NSSAIs) of a network slice that the UE requests to access.

702: The AMF sends a first request message to a UDM, and correspondingly, the UDM receives the first request message.

703: The UDM sends a first response message to the AMF, and correspondingly, the AMF receives the first response message.

It may be understood that for descriptions of step 701 to step 703, refer to the descriptions of step 601 to step 603 in FIG. 6A and FIG. 6B. Details are not described herein again.

704: The AMF determines, based on first indication information, to allow the LTE to access a default subscribed network slice.

It may be understood that, for descriptions of step 704, refer to the descriptions of step 402 in FIG. 4, or refer to the descriptions of FIG. 5b. Details are not described herein again.

705: The AMF sends a second request message to an NSACF, and correspondingly, the NSACF receives the second request message. The second request message carries target NSSAI and identification information of the default subscribed network slice.

In this embodiment of this application, the second request message carries the target NSSAI and the identification information of the default subscribed network slice, so that the NSACF can return, to the AMF, a quantity of UEs that access each network slice in the target NSSAI and a quantity of UEs that access the default subscribed network slice. Alternatively, the NSACF may return, to the AMF, whether the quantity of UEs that access each network slice in the target NSSAI is greater than or equal to a first threshold and whether the quantity of UEs that access the default subscribed network slice is less than a second threshold. That is, after receiving the second request message, the NSACF may return the foregoing information to the AMF by default. It may be understood that a quantity of default subscribed network slices is not limited in this embodiment of this application. According to the method shown in FIG. 4, the AMF may send identification information of one or M or N default subscribed network slices to the NSACF. For example, the NSACF may determine a first network slice based on a quantity of UEs that access each default subscribed network slice.

Optionally, the second request message further includes fourth indication information. The fourth indication information indicates to trigger (or may be understood as activating) admission control on the default subscribed network slice when the quantity of UEs that access each network slice in the target NSSAI is greater than or equal to the first threshold. That is, the second request message may explicitly indicate, by carrying the fourth indication information, the NSACF to trigger admission control on the default subscribed network slice. To be specific, the NSACF obtains, based on the fourth indication information, the quantity of UEs that access the default subscribed network slice, or obtains whether the quantity of UEs that access the default subscribed network slice is less than the second threshold. In other words, if a quantity of UEs that access a network slice in the target NSSAI is less than the first threshold, admission control on the default subscribed network slice may not be triggered.

Optionally, the second request message further includes fifth indication information. The fifth indication information indicates the NSACF to determine the first network slice from a plurality of default subscribed network slices. Alternatively, the fifth indication information indicates the NSACF to perform UE counting on only one (for example, the first network slice) of the plurality of default subscribed network slices. The second request message may carry identification information of the plurality of default subscribed network slices (a plurality of first network slices). Therefore, the NSACF performs counting on only one of the plurality of default subscribed network slices based on the fifth indication information, that is, increases a quantity of UEs that access the first network slice by 1. It may be understood that the first network slice on which the NSACF performs counting is a first network slice in a registration accept message.

706: The NSACF sends a second response message to the AMF, and correspondingly, the AMF receives the second response message.

Optionally, the second response message carries only second indication information. The second indication information indicates that the quantity of UEs that access each network slice in the target NSSAI is greater than or equal to the first threshold. In other words, the second response message may include only the second indication information, so that the AMF may consider, based on the second indication information, that the quantity of UEs that access the first network slice is less than the second threshold.

Optionally, the second response message carries only third indication information. The third indication information indicates that the quantity of UEs that access the first network slice is less than the second threshold. Therefore, the AMF may consider, by default based on the third indication information, that the quantity of UEs that access each network slice in the target NSSAI is greater than or equal to the first threshold.

Optionally, the second response message may carry both the second indication information and the third indication information.

707: The AMF sends a registration accept message to the UE, and correspondingly, the UE receives the registration accept message.

It may be understood that for descriptions of step 707, refer to the descriptions of step 607 in FIG. 6A and FIG. 6B. Details are not described herein again.

It can be understood that the method shown in FIG. 7A and FIG. 7B may further include step 708 to step 713. For descriptions of step 708 to step 713, refer to step 608 to step 613 shown in FIG. 6A and FIG. 6B. Details are not described herein again.

According to this embodiment of this application, it can be ensured that a terminal device can access the first network slice, to avoid a case in which registration of the terminal device is unsuccessful. In addition, because an access and mobility management network element may determine the first network slice by interacting with a first network element once (via the second request message and the second response message), signaling interaction efficiency is improved.

FIG. 8A and FIG. 8B are a schematic flowchart of a network slice admission control method according to an embodiment of this application. As shown in FIG. 8A and FIG. 8B, the method includes the following steps.

801: A UE sends a registration request message to an AMF, and correspondingly the AMF receives the registration request message. The registration request message carries identification information (requested NSSAIs) of a network slice that the UE requests to access.

802: The AMF sends a first request message to a UDM, and correspondingly, the UDM receives the first request message.

803: The UDM sends a first response message to the AMF, and correspondingly, the AMF receives the first response message.

804: The AMF determines, based on first indication information, to allow the LTE to access a default subscribed network slice.

It may be understood that for descriptions of step 802 to step 804, refer to the descriptions of step 702 to step 704 shown in FIG. 7A and FIG. 7B. Details are not described herein again.

805: The AMF sends a fourth request message to an NSACF, and correspondingly, the NSACF receives the fourth request message. The fourth request message carries identification information of a network slice subject to admission control in the network slice that the UE requests to access.

806: The NSACF sends a fourth response message to the AMF, and correspondingly, the AMF receives the fourth response message. The fourth response message carries second indication information. The second indication information indicates that a quantity of UEs that access the network slice subject to admission control in the network slice that the UE requests to access is greater than or equal to a first threshold.

It may be understood that a sequence of step 804 and step 805 is not limited in this embodiment of this application. For example, the AMF may alternatively perform step 804 after receiving the fourth response message. Alternatively, step 805 is performed after step 802 to step 804 are performed.

It may be understood that for descriptions of step 805 and step 806, refer to step 604 and step 605 shown in FIG. 6A and FIG. 6B. Details are not described herein again.

807: The AMF sends a third request message to the NSACF, where the third request message carries identification information of the default subscribed network slice.

Optionally, the third request message further includes sixth indication information. The sixth indication information indicates the NSACF to determine one default subscribed network slice from a plurality of default subscribed network slices whose quantities of accessing UEs are less than a second threshold. Alternatively, the sixth indication information indicates the NSACF to perform UE counting on only one (for example, a first network slice) of the plurality of default subscribed network slices. It may be understood that for descriptions of the sixth indication information, refer to descriptions of the fifth indication information in FIG. 7A and FIG. 7B. Details are not described herein again.

808: The NSACF sends a third response message to the AMF, where the third response message carries third indication information, and the third indication information indicates that a quantity of terminal UEs that access the first network slice is less than the second threshold.

Optionally, the third response message may further carry identification information of the first network slice.

Optionally, the third indication information may alternatively indicate that a quantity of UEs that access each of the default subscribed network slices is less than the second threshold. In this case, the AMF may determine one of the default subscribed network slices as the first network slice.

809: The AMF sends a registration accept message to the UE, and correspondingly the UE receives the registration accept message.

It may be understood that, in the methods shown in FIG. 6A and FIG. 6B to FIG. 8A and FIG. 8B, when the AMF needs to send a request message (for example, the fourth request message, the second request message, or the third request message) to the NSACF, the AMF may invoke a service-based operation, for example, Nnsacf_NSQuotaAvailabilityCheck_Request. When the NSACF returns a response message (for example, the fourth response message, the second response message, or the third response message) to the AMF, the NSACF may invoke Nnsacf_NSQuotaAvailabilityCheck_Response. When the AMF sends a request message (for example, the first request message) to the UDM, the AMF may invoke a service-based operation, for example, Nudm_SDM_Get. When the UDM returns a response message (for example, the first response message) to the AMF, the UDM may invoke a service-based operation, for example, Nudm_SDM_Get response.

In this embodiment of this application, even if a quantity of terminal devices that access a network slice subject to admission control in a network slice that the terminal device requests is greater than or equal to the first threshold, the terminal device can still access the network slice, for example, the first network slice. Therefore, not only registration of the terminal device is successful, but also it can be ensured that the terminal device can perform service communication and the like in time via the first network slice.

The following describes communication apparatuses provided in embodiments of this application.

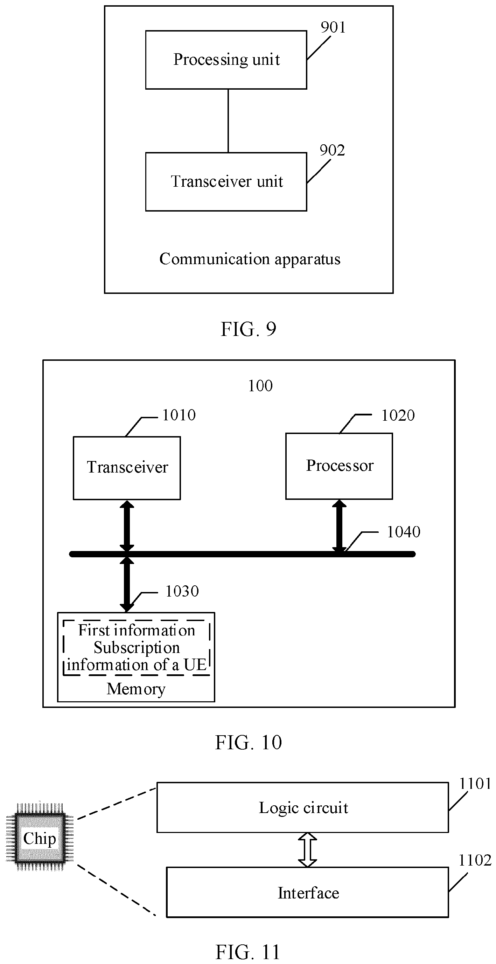

In this application, the communication apparatus is divided into functional modules based on the foregoing method embodiments. For example, each functional module may be obtained through division based on a corresponding function, or two or more functions may be integrated into one processing module. The integrated module may be implemented in a form of hardware, or may be implemented in a form of a software functional module. It should be noted that, the module division in this application is an example, and is merely logical function division. During actual implementation, another division manner may be used. The following describes in detail communication apparatuses in embodiments of this application with reference to FIG. 9 to FIG. 11.

FIG. 9 is a schematic diagram of a structure of a communication apparatus according to an embodiment of this application. As shown in FIG. 9, the communication apparatus includes a processing unit 901 and a transceiver unit 902.

In some embodiments of this application, the communication apparatus may be the access and mobility management network element, the AMF, a chip in the AMF, or the like shown above. In other words, the communication apparatus may be configured to perform steps, functions, or the like performed by the AMF in the foregoing method embodiments.

The transceiver unit 902 is configured to input a registration request message.

The transceiver unit 902 is configured to output, when a quantity of UEs that access a network slice subject to admission control in a network slice that a UE requests to access is greater than or equal to a first threshold, a registration accept message that carries identification information of a first network slice.

In this embodiment of this application, that the transceiver unit 902 is configured to input a registration request message includes: The transceiver unit 902 is configured to receive the registration request message from the UE. That the transceiver unit 902 is configured to output a registration accept message includes: The transceiver unit 902 is configured to send the registration accept message to the UE. It may be understood that descriptions of the transceiver unit herein are also applicable to a first request message and a first response message, a second request message and a second response message, a third request message and a third response message, a fourth request message and a fourth response message, and the like that are described in this application. For example, that the transceiver unit 902 outputs the first request message shown below includes: The transceiver unit 902 sends the first request message to a UDM.

In a possible implementation, the processing unit 901 is configured to determine to allow the UE to access a default subscribed network slice.

In a possible implementation, the processing unit 901 is specifically configured to configure first information, and determine, based on the first information, to allow the UE to access the default subscribed network slice.

In a possible implementation, the processing unit 901 is configured to output the first request message and input the first response message by using the transceiver unit 902. The processing unit 901 is configured to determine, based on first indication information, to allow the UE to access the default subscribed network slice.

In a possible implementation, the processing unit 901 is specifically configured to determine, based on subscription information of the UE, to allow the UE to access the default subscribed network slice.

In a possible implementation, the transceiver unit 902 is further configured to output the second request message, and input the second response message.

In a possible implementation, the transceiver unit 902 is further configured to output the third request message, and input the third response message.

In a possible implementation, the transceiver unit 902 is further configured to output a subscription request message, input a first notification message, and output a second notification message.

In this embodiment of this application, for descriptions of the registration request message, a registration response message, the default subscribed network slice, the first request message, the first response message, the second request message, the second response message, the third request message, the third response message, the first indication information, second indication information, third indication information, fourth indication information, fifth indication information, sixth indication information, seventh indication information, the subscription request message, the first notification message, the second notification message, and the like, refer to the foregoing method embodiments. Details are not described herein again.

It may be understood that specific descriptions of the transceiver unit and the processing unit described in this embodiment of this application are merely examples. For specific functions, steps, or the like of the transceiver unit and the processing unit, refer to the foregoing method embodiments. Details are not described herein again. For example, the transceiver unit 902 may be further configured to perform a receiving step in step 401 shown in FIG. 4, the processing unit 901 may be further configured to perform step 402 shown in FIG. 4, and the transceiver unit 902 may be further configured to perform a sending step in step 403 shown in FIG. 4. For example, the transceiver unit 902 and the processing unit 901 may be further configured to perform the corresponding methods shown in FIG. 6A and FIG. 6B to FIG. 8A and FIG. 8B. Details are not described herein again.

FIG. 9 is reused. In some other embodiments of this application, the communication apparatus may be the terminal device (for example, UE), a chip in the terminal device, or the like shown above. In other words, the communication apparatus may be configured to perform the steps, functions, or the like performed by the UE in the foregoing method embodiments.

The transceiver unit 902 is configured to output the registration request message, and input the registration accept message. Alternatively, it may be understood that the processing unit 901 outputs the registration request message and inputs the registration accept message by using the transceiver unit 902.

In this embodiment of this application, for descriptions of the registration request message and the registration accept message, refer to the descriptions in the foregoing method embodiments. Details are not described herein again.

It may be understood that specific descriptions of the transceiver unit and the processing unit described in this embodiment of this application are merely examples. For specific functions, steps, or the like of the transceiver unit and the processing unit, refer to the foregoing method embodiments. Details are not described herein again.

The foregoing describes the AMF and the LTE in this embodiment of this application. The following describes possible product types of the AMF and the UE. It should be understood that any product in any form that has a function of the AMF described in FIG. 9 or any product in any form that has a function of the UE described in FIG. 9 falls within the protection scope of embodiments of this application. It should be further understood that the following descriptions are merely an example, and product types of the AMF and the UE in embodiments of this application are not limited thereto.

In a possible implementation, in the communication apparatus shown in FIG. 9, the processing unit 901 may be one or more processors. The transceiver unit 902 may be a transceiver, or the transceiver unit 902 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A connection manner between the processor and the transceiver is not limited in this embodiment of this application.

As shown in FIG. 10, a communication apparatus 100 includes one or more processors 1020 and a transceiver 1010.

For example, when the communication apparatus is configured to perform the steps, the methods, or the functions performed by the AMF described above, the transceiver 1010 is configured to receive a registration request message, send a registration accept message, and the like. For specific descriptions of the processor and the transceiver, refer to the foregoing descriptions of the processing unit and the transceiver unit. Details are not described herein again.

For example, when the communication apparatus is configured to perform the steps, the methods, or the functions performed by the UE described above, the transceiver 1010 is configured to send the registration request message and receive the registration accept message.

In this embodiment of this application, for descriptions of the registration request message, a registration response message, a default subscribed network slice, a first request message, a first response message, a second request message, a second response message, a third request message, a third response message, first indication information, second indication information, third indication information, fourth indication information, fifth indication information, sixth indication information, seventh indication information, a subscription request message, a first notification message, a second notification message, and the like, refer to the foregoing method embodiments. Details are not described herein again.

In each implementation of the communication apparatus shown in FIG. 10, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 100 may further include one or more memories 1030, configured to store program instructions and/or data. The memory 1030 is coupled to the processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. Optionally, at least one of the one or more memories may be included in the processor. In this embodiment of this application, the memory 630 may store first information, subscription information of the UE, or the like, which is represented by using a dashed line in FIG. 10.

In this embodiment of this application, a specific connection medium between the transceiver 1010, the processor 1020, and the memory 1030 is not limited. In this embodiment of this application, the memory 1030, the processor 1020, and the transceiver 1010 are connected via a bus 1040 in FIG. 10. The bus is represented by using a bold line in FIG. 10. A connection manner between other components is merely an example for description, and is not limited thereto. The bus may be classified into an address bus, a data bus, a control bus, and the like. For ease of representation, only one bold line is used for representation in FIG. 10, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like, and may implement or execute the methods, steps, and logical block diagrams disclosed in embodiments of this application. The general-purpose processor may be a microprocessor or any conventional processor or the like. The steps of the methods disclosed with reference to embodiments of this application may be directly performed and completed by a hardware processor, may be performed and completed by using a combination of hardware in the processor and a software module, or the like.

In this embodiment of this application, the memory may include but is not limited to a non-volatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), and the like. The memory is any storage medium that can be used for carrying or storing program code in a form of an instruction or a data structure and that can be read and/or written by a computer (for example, the communication apparatus described in this application). However, this is not limited thereto. The memory in this embodiment of this application may alternatively be a circuit or any other apparatus that can implement a storage function, and is configured to store program instructions and/or data.

When the communication apparatus is a terminal device, the processor 1020 is mainly configured to process a communication protocol and communication data, control the entire communication apparatus, execute a software program, and process data of the software program. The memory 1030 is mainly configured to store the software program and the data. The transceiver 1010 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. An input/output apparatus, such as a touchscreen, a display, or a keyboard, is mainly configured to receive data input by a user and output data to the user.

After the communication apparatus is powered on, the processor 1020 may read the software program in the memory 1030, interpret and execute instructions of the software program, and process the data of the software program. When data needs to be sent wirelessly, the processor 1020 performs baseband processing on the to-be-sent data, and then outputs a baseband signal to a radio frequency circuit. The radio frequency circuit performs radio frequency processing on the baseband signal, and then sends a radio frequency signal in a form of electromagnetic wave through the antenna. When data is sent to the communication apparatus, the radio frequency circuit receives a radio frequency signal through the antenna, converts the radio frequency signal into a baseband signal, and outputs the baseband signal to the processor 1020. The processor 1020 converts the baseband signal into data, and processes the data. In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus described in this embodiment of this application may further have more components than those in FIG. 10, and the like. This is not limited in this embodiment of this application. The methods performed by the processor and the transceiver are merely examples. For specific steps performed by the processor and the transceiver, refer to the methods described above.

In another possible implementation, in the communication apparatus shown in FIG. 9, the processing unit 901 may be one or more logic circuits. The transceiver unit 902 may be an input/output interface that is also referred to as a communication interface, an interface circuit, an interface, or the like. Alternatively, the transceiver unit 902 may be a sending unit and a receiving unit. The sending unit may be an output interface, and the receiving unit may be an input interface. The sending unit and the receiving unit are integrated into one unit, for example, an input/output interface. As shown in FIG. 11, a communication apparatus shown in FIG. 11 includes a logic circuit 1101 and an interface 1102. In other words, the processing unit 901 may be implemented by using the logic circuit 1101, and the transceiver unit 902 may be implemented by using the interface 1102. The logic circuit 1101 may be a chip, a processing circuit, an integrated circuit, a system on chip (system on chip, SoC), or the like. The interface 1102 may be a communication interface, an input/output interface, a pin, or the like. For example, FIG. 7A and FIG. 7B are an example in which the communication apparatus is the chip. The chip includes the logic circuit 1101 and the interface 1102.

In this embodiment of this application, the logic circuit may further be coupled to the interface. A specific connection manner of the logical circuit and the interface is not limited in this embodiment of this application.

For example, when the communication apparatus is configured to perform the methods, the functions, or the steps performed by the AMF described above, the interface 1102 is configured to input a registration request message and output a registration accept message.

In a possible implementation, the logic circuit 1101 is configured to determine to allow a UE to access a default subscribed network slice.

In a possible implementation, the logic circuit 1101 is specifically configured to configure first information, and determine, based on the first information, to allow the UE to access the default subscribed network slice.

In a possible implementation, the logic circuit 1101 is configured to output a first request message and input a first response message via the interface 1102. The logic circuit 1101 is configured to determine, based on first indication information, to allow the UE to access the default subscribed network slice.

In a possible implementation, the logic circuit 1101 is specifically configured to determine, based on subscription information of the UE, to allow the UE to access the default subscribed network slice.

In a possible implementation, the interface 1102 is further configured to output a second request message, and input a second response message.

In a possible implementation, the interface 1102 is further configured to output a third request message, and input a third response message.

In a possible implementation, the interface 1102 is further configured to output a subscription request message, input a first notification message, and output a second notification message.

In this embodiment of this application, for descriptions of the registration request message, a registration response message, the default subscribed network slice, the first request message, the first response message, the second request message, the second response message, the third request message, the third response message, the first indication information, second indication information, third indication information, fourth indication information, fifth indication information, sixth indication information, seventh indication information, the subscription request message, the first notification message, the second notification message, and the like, refer to the foregoing method embodiments. Details are not described herein again.

For example, when the communication apparatus is configured to perform the methods, the functions, or the steps performed by the UE described above, the interface 1102 is configured to output the registration request message, and input the registration accept message.

It may be understood that the communication apparatus shown in this embodiment of this application may implement the method provided in embodiments of this application in a form of hardware or in a form of software. This is not limited in embodiments of this application.

For specific implementations of embodiments shown in FIG. 11, refer to the foregoing embodiments. Details are not described herein again.

An embodiment of this application further provides a wireless communication system. The wireless communication system includes an AMF and a UE. The AMF and the UE may be configured to perform the method according to any one of the foregoing embodiments (as shown in FIG. 4, FIG. 5a to FIG. 5c, or FIG. 6A and FIG. 6B to FIG. 8A and FIG. 8B).

An embodiment of this application further provides a wireless communication system. The wireless communication system includes an AMF and an NSACF. The AMF and the NSACF may be configured to perform the method according to any one of the foregoing embodiments (as shown in FIG. 5a to FIG. 5c or FIG. 6A and FIG. 6B to FIG. 8A and FIG. 8B).

An embodiment of this application further provides a wireless communication system. The wireless communication system includes an AMF, a UE, and an NSACF. The AMF, the UE, and the NSACF may be configured to perform the method according to any one of the foregoing embodiments (as shown in FIG. 4, FIG. 5a to FIG. 5c, or FIG. 6A and FIG. 6B to FIG. 8A and FIG. 8B).

In addition, this application further provides a computer program. The computer program is used for implementing an operation and/or processing performed by an AMF in the method provided in this application.

This application further provides a computer program. The computer program is used for implementing an operation and/or processing performed by a UE in the method provided in this application.

This application further provides a computer-readable storage medium. The computer-readable storage medium stores computer code. When the computer code is run on a computer, the computer is enabled to perform an operation and/or processing performed by an AMF in the method provided in this application.

This application further provides a computer-readable storage medium. The computer-readable storage medium stores computer code. When the computer code is run on a computer, the computer is enabled to perform an operation and/or processing performed by a LTE in the method provided in this application.

This application further provides a computer program product. The computer program product includes computer code or a computer program. When the computer code or the computer program is run on a computer, an operation and/or processing performed by an AMF in the method provided in this application is implemented.

This application further provides a computer program product. The computer program product includes computer code or a computer program. When the computer code or the computer program is run on a computer, an operation and/or processing performed by a LTE in the method provided in this application is implemented.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the technical effects of the solutions provided in embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable-storage medium, and includes several instructions for instructing a computer device (which may be a personal computer, a server, a network device, or the like) to perform all or some of the steps of the methods described in embodiments of this application. The foregoing readable storage medium includes: any medium, such as a USB flash drive, a removable hard disk, a read-only memory (read-only memory, ROM), a random access memory (random access memory, RAM), a magnetic disk, or an optical disc, that can store program code.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network slice admission control method, wherein the method comprises:
receiving, by an access and mobility management network element, a registration request message from a terminal device, wherein the registration request message carries identification information of a network slice that the terminal device requests to access; and
when a quantity of terminal devices that access a network slice subject to admission control in the network slice that the terminal device requests to access is greater than or equal to a first threshold, sending, by the access and mobility management network element to the terminal device, a registration accept message that carries identification information of a first network slice, wherein the first network slice is a network slice that the terminal device is allowed to access.

2. The method according to claim 1, wherein the first network slice is a default subscribed network slice of the terminal device.

3. The method according to claim 1 or 2, wherein the method further comprises:
determining, by the access and mobility management network element, to allow the terminal device to access the default subscribed network slice.

4. The method according to claim 3, wherein the determining, by the access and mobility management network element, to allow the terminal device to access the default subscribed network slice comprises:
configuring, by the access and mobility management network element, first information, wherein the first information indicates to allow the terminal device to access the default subscribed network slice when the quantity of terminal devices that access the network slice subject to admission control in the network slice that the terminal device requests to access is greater than or equal to the first threshold; and
determining, by the access and mobility management network element based on the first information, to allow the terminal device to access the default subscribed network slice.

5. The method according to claim 3, wherein the determining, by the access and mobility management network element, to allow the terminal device to access the default subscribed network slice comprises:
sending, by the access and mobility management network element, a first request message to a unified data management network element;
receiving, by the access and mobility management network element, a first response message from the unified data management network element, wherein the first response message carries the identification information of the first network slice and first indication information, and the first indication information indicates to allow the terminal device to access the default subscribed network slice when the quantity of terminal devices that access the network slice subject to admission control in the network slice that the terminal device requests to access is greater than or equal to the first threshold; and
determining, by the access and mobility management network element based on the first indication information, to allow the terminal device to access the default subscribed network slice.

6. The method according to claim 3, wherein the determining, by the access and mobility management network element, to allow the terminal device to access the default subscribed network slice comprises:
determining, by the access and mobility management network element based on subscription information of the terminal device, to allow the terminal device to access the default subscribed network slice, wherein the subscription information of the terminal device comprises first indication information, and the first indication information indicates to allow the terminal device to access the default subscribed network slice when the quantity of terminal devices that access the network slice subject to admission control in the network slice that the terminal device requests to access is greater than or equal to the first threshold.

7. The method according to any one of claims 1 to 6, wherein a quantity of terminal devices that access the first network slice is less than a second threshold.

8. The method according to any one of claims 1 to 7, wherein the method further comprises:
sending, by the access and mobility management network element, a second request message to a first network element, wherein the second request message carries identification information of the network slice subject to admission control in the network slice that the terminal device requests to access and identification information of the default subscribed network slice; and
receiving, by the access and mobility management network element, a second response message from the first network element, wherein the second response message carries second indication information and third indication information, the second indication information indicates that the quantity of terminal devices that access the network slice subject to admission control in the network slice that the terminal device requests to access is greater than or equal to the first threshold, and the third indication information indicates that a quantity of terminal devices that access the default subscribed network slice is less than the second threshold.

9. The method according to claim 8, wherein the second request message further comprises fourth indication information, and the fourth indication information indicates to trigger admission control on the default subscribed network slice when the quantity of terminal devices that access the network slice subject to admission control in the network slice that the terminal requests to access is greater than or equal to the first threshold.

10. The method according to claim 8 or 9, wherein the second request message further comprises fifth indication information, and the fifth indication information indicates the first network element to determine the first network slice from a plurality of default subscribed network slices, or the fifth indication information indicates the first network element to perform terminal device counting on only the first network slice in a plurality of default subscribed network slices.

11. The method according to claim 10, wherein the first network slice is a network slice in the plurality of default subscribed network slices that is accessed by a smallest quantity of terminal devices.

12. The method according to any one of claims 1 to 7, wherein the method further comprises:
sending, by the access and mobility management network element, a third request message to a first network element when the quantity of terminal devices that access the network slice subject to admission control in the network slice that the terminal device requests to access is greater than or equal to the first threshold, wherein the third request message carries identification information of the default subscribed network slice; and
receiving, by the access and mobility management network element, a third response message from the first network element, wherein the third response message carries third indication information, and the third indication information indicates that a quantity of terminal devices that access the default subscribed network slice is less than the second threshold.

13. The method according to claim 12, wherein the third request message further comprises sixth indication information, and the sixth indication information indicates the first network element to determine the first network slice from a plurality of default subscribed network slices, or the sixth indication information indicates the first network element to perform terminal device counting on only the first network slice in the plurality of default subscribed network slices.

14. The method according to claim 13, wherein the first network slice is a network slice in the plurality of default subscribed network slices that is accessed by a smallest quantity of terminal devices.

15. The method according to any one of claims 1 to 6, wherein the first network slice is a network slice not subject to admission control.

16. The method according to any one of claims 1 to 15, wherein the method further comprises:
sending, by the access and mobility management network element, a subscription request message to the first network element, wherein the subscription request message carries the identification information of the network slice subject to admission control in the network slice that the terminal device requests to access and identification information of the terminal device;
receiving, by the access and mobility management network element, a first notification message from the first network element, wherein the first notification message carries seventh indication information, and the seventh indication information indicates that a quantity of terminal devices that access a second network slice in the network slice subject to admission control in the network slice that the terminal device requests to access is less than the first threshold; and
sending, by the access and mobility management network element, a second notification message to the terminal device, wherein the second notification message carries identification information of the second network slice.

17. A communication apparatus, wherein the apparatus comprises:
a transceiver unit, configured to receive a registration request message from a terminal device, wherein the registration request message carries identification information of a network slice that the terminal device requests to access, wherein
the transceiver unit is further configured to: when a quantity of terminal devices that access a network slice subject to admission control in the network slice that the terminal device requests to access is greater than or equal to a first threshold, send, to the terminal device, a registration accept message that carries identification information of a first network slice, wherein the first network slice is a network slice that the terminal device is allowed to access, and the first network slice is not comprised in the network slice that the terminal device requests to access.

18. The apparatus according to claim 17, wherein the first network slice is a default subscribed network slice of the terminal device.

19. The apparatus according to claim 17 or 18, wherein the apparatus further comprises:
a processing unit, configured to determine to allow the terminal device to access the default subscribed network slice.

20. The apparatus according to claim 19, wherein
the processing unit is specifically configured to: configure first information, wherein the first information indicates to allow the terminal device to access the default subscribed network slice when the quantity of terminal devices that access the network slice subject to admission control in the network slice that the terminal device requests to access is greater than or equal to the first threshold; and
determine, for the access and mobility management network element based on the first information, to allow the terminal device to access the default subscribed network slice.

21. The apparatus according to claim 19, wherein
the processing unit is configured to: send a first request message to a unified data management network element by using the transceiver unit; and receive a first response message from the unified data management network element, wherein the first response message carries the identification information of the first network slice and first indication information, and the first indication information indicates to allow the terminal device to access the default subscribed network slice when the quantity of terminal devices that access the network slice subject to admission control in the network slice that the terminal device requests to access is greater than or equal to the first threshold; and
the processing unit is further configured to determine, based on the first indication information, to allow the terminal device to access the default subscribed network slice.

22. The apparatus according to claim 19, wherein
the processing unit is specifically configured to determine, based on subscription information of the terminal device, to allow the terminal device to access the default subscribed network slice, wherein the subscription information of the terminal device comprises first indication information, and the first indication information indicates to allow the terminal device to access the default subscribed network slice when the quantity of terminal devices that access the network slice subject to admission control in the network slice that the terminal device requests to access is greater than or equal to the first threshold.

23. The apparatus according to any one of claims 17 to 22, wherein a quantity of terminal devices that access the first network slice is less than a second threshold.

24. The apparatus according to any one of claims 17 to 23, wherein
the transceiver unit is further configured to: send a second request message to a first network element, wherein the second request message carries identification information of the network slice subject to admission control in the network slice that the terminal device requests to access and identification information of the default subscribed network slice; and
receive a second response message from the first network element, wherein the second response message carries second indication information and third indication information, the second indication information indicates that the quantity of terminal devices that access the network slice subject to admission control in the network slice that the terminal device requests to access is greater than or equal to the first threshold, and the third indication information indicates that a quantity of terminal devices that access the default subscribed network slice is less than the second threshold.

25. The apparatus according to any one of claims 17 to 24, wherein
the transceiver unit is further configured to send a third request message to a first network element when the quantity of terminal devices that access the network slice subject to admission control in the network slice that the terminal device requests to access is greater than or equal to the first threshold, wherein the third request message carries identification information of the default subscribed network slice; and
the transceiver unit further receives a third response message from the first network element, wherein the third response message carries third indication information, and the third indication information indicates that a quantity of terminal devices that access the default subscribed network slice is less than the second threshold.

26. The apparatus according to any one of claims 17 to 22, wherein the first network slice is a network slice not subject to admission control.

27. The apparatus according to any one of claims 17 to 26, wherein
the transceiver unit is further configured to: send a subscription request message to the first network element, wherein the subscription request message carries the identification information of the network slice subject to admission control in the network slice that the terminal device requests to access and identification information of the terminal device;
receive a first notification message from the first network element, wherein the first notification message carries seventh indication information, and the seventh indication information indicates that a quantity of terminal devices that access a second network slice in the network slice subject to admission control in the network slice that the terminal device requests to access is less than the first threshold; and
send a second notification message to the terminal device, wherein the second notification message carries identification information of the second network slice.

28. A communication apparatus, comprising a processor and a memory, wherein
the processor is configured to store computer-executable instructions; and
the processor is configured to execute the computer-executable instructions, to perform the method according to any one of claims 1 to 16.

29. A communication apparatus, comprising a logic circuit and an interface, wherein the logic circuit is coupled to the interface; and
the interface is configured to input and/or output code instructions, and the logic circuit is configured to execute the code instructions, to perform the method according to any one of claims 1 to 16.

30. A computer-readable storage medium, wherein the computer-readable storage medium is configured to store a computer program; and when the computer program is executed, the method according to any one of claims 1 to 16 is performed.
